# EUROPÄISCHE PATENTSCHRIFT

(11) **EP 1 249 114 B1**
(45) Veröffentlichungstag und Bekanntmachung des Hinweises auf die Patenterteilung: **15.05.2013**
(21) Anmeldenummer: 00991615.6
(22) Anmeldetag: 20.12.2000
(51) Int. Cl.: H04L 27/10, H04L 27/32, H04L 25/49, H04L 5/02, H04B 1/69, H04B 7/12, H04L 1/04, H04B 14/02

(54) **MODULATION MITTELS CHIRP-SIGNALEN, INSBESONDERE ZUR ANWENDUNG IN EINER MEHRWEGEUMGEBUNG**
MODULATION USING CHIRP SIGNALS IN A MULTIPATH ENVIRONMENT
MODULATION À L'AIDE DES SIGNAUX CHIRP DANS UN ENVIRONNEMENT DE PROPAGATION À TRAJETS MULTIPLES

(30) Priorität: 21.12.1999 DE 19961777
(43) Veröffentlichungstag der Anmeldung: 16.10.2002
(73) Patentinhaber: Bannasch, Rudolf, 13053 Berlin (DE); Kebkal, Konstantin, 12683 Berlin (DE)
(72) Erfinder: Bannasch, Rudolf, 13053 Berlin (DE); Kebkal, Konstantin, 12683 Berlin (DE)
(74) Vertreter: Hertz, Oliver
(86) Internationale Anmeldenummer: PCT/EP2000/013033
(87) Internationale Veröffentlichungsnummer: WO 2001/047203

(56) Entgegenhaltungen:
- EP-A- 0 942 538
- WO-A-99/63501
- US-A- 3 493 865
- US-A- 5 070 500
- US-A- 5 278 862
- US-A- 6 047 023
- HILL W ET AL: "DEEP-OCEAN TESTS OF AN ACOUSTIC MODEM INSENSITIVE TO MULTIPATH DISTORTION" PROCEEDINGS OF THE OCEANS CONFERENCE,US,NEW YORK, IEEE, Bd. CONF. 13, 31. Oktober 1988 (1988-10-31), Seiten 275-282, XP000042345
- KIM J ET AL: "Coded multiple chirp spread spectrum system and overlay service" PROCEEDINGS OF THE TWENTIETH SOUTHEASTERN SYMPOSIUM ON SYSTEM THEORY (CAT. NO.88CH2553-6), CHARLOTTE, NC, USA, 20-22 MARCH 1988, Seiten 336-341, XP002170525 1988, Washington, DC, USA, IEEE Comput. Soc. Press, USA ISBN: 0-8186-0847-1
- PATENT ABSTRACTS OF JAPAN vol. 1998, no. 10, 31. August 1998 (1998-08-31) -& JP 10 126382 A (NEC CORP), 15. Mai 1998 (1998-05-15) -& US 6 049 563 A 11. April 2000 (2000-04-11)
- KEBKAL K G ET AL: "Implementation of a sweep-spread function for communication over underwater acoustic channels" OCEANS 2000 MTS/IEEE CONFERENCE PROCEEDINGS, PROVIDENCE, RI, USA, 11-14 SEPT. 2000, Bd. 3, Seiten 1829-1838 , XP002170526 2000, Piscataway, NJ, USA, IEEE, USA ISBN: 0-7803-6551-8

## Beschreibung

Die Erfindung betrifft Verfahren und Vorrichtungen zur Sendung, Übertragung und/oder zum Empfang von Informationen.

Für die Informationübertragung mittels Wellen werden in der Regel starr feststehende Trägerfrequenzen genutzt, wobei die Qualität und Geschwindigkeit der Übertragung häufig durch Störeinflüsse in der Übertragungsstrecke beeinträchtigt wird. Reale Übertragungskanäle können sehr unterschiedlich beschaffen sein, unterschiedliche Übertragungseigenschaften aufweisen, zu denen lineare und nichtlineare Verzerrungen, zeitlich konstante und zeitvariante Einflüsse sowie additive Störungen wie Rauschen ("Noise"), Einflüsse fremder Signale u.a.m. gehören können. Bei Multiträgersystemen und bei der Übertragung durch gedächtnisbehaftete Übertragungskanäle bildet zudem die Intersymbol-Interferenz (ISI) ein besonderes Problemfeld. Die Übertragungseigenschaften resultieren somit aus einer Fülle unterschiedlicher Effekte und Mechanismen, die auf vielfältige Weise zusammenwirken können.

Ein komplexes Problem bildet insbesondere die (oftmals zeitvariable) Mehrwegausbreitung ("Multipath Propagation"). Sie tritt beispielsweise bei der Übertragung durch inhomogene Medien, in strukturierte Übertragungsräumen etc. auf, in denen das gesendete Signal von diversen Grenzflächen reflektiert und/oder an Kanten gebeugt oder gestreut werden kann. Das Signal trifft dann nicht nur auf dem direkten Verbindungsweg (direkter Pfad), sondern gleichzeitig bzw. zeitlich versetzt ("Time Delay Spread" bzw. insgesamt "Delay Spread") mit unterschiedlicher Dämpfung auch über verschiedene Umwege beim Empfänger ein (Mehrfachempfang). Abgesehen von der unterschiedlichen Länge können die einzelnen Pfade aufgrund ihrer jeweiligen Geometrie und/oder individuellen physikalischen Beschaffenheit den betreffenden Signalanteilen unterschiedliche Veränderungen aufprägen (unterschiedliche Dämpfung, nichtdeterministische und/oder deterministische interne Phasenverschiebungen u.a.m.). Diese einzelnen Anteile werden als Mehrwegekomponenten ("Multipath Arrivals", Echos) bezeichnet. Jede dieser Mehrwegekomponenten bringt somit ihre eigene Geschichte zum Empfänger mit, wo sie sich überlagern. Die Überlagerung der Mehrwegekomponenten kann im Empfangsbereich zu örtlich und zeitlich schwer vorherbestimmbaren Verzerrungen, Amplitudenschwankungen und Phasenverschiebungen führen (Schwund, Fading), im ungünstigsten Fall auch zur Auslöschung des Signals. Dieser Effekt wirkt sich insbesondere auch bei zeitvarianten Übertragungsbedingungen sowie bei der Verwendung mobiler Sende- und Empfängersysteme nachteilig aus. Hier ist der Schwund oftmals frequenzselektiv und zeitselektiv, die Übertragungsfunktion meist nicht deterministisch bestimmbar.

In der Nachrichtentechnik sind zahlreiche Methoden bekannt, mittels derer versucht wird, die o.g. Störungen zu minimieren und/oder-empfängerseitig zu kompensieren. Aus dem umfangreichen Maßnahmekatalog seien drei Hauptkategorien genannt: Antennensysteme, empfängerseitige Signalaufbereitung mittels Entzerrer, sowie spezielle Modulationsverfahren.

Sofern es die Übertragungsbedingungen bzw. Systemvorgaben zulassen, kann das Problem der Mehrwegeausbreitung durch Richtfunk und/oder winkelselektive Empfangsantennen abgemildert werden. Beim Richtungssenden versucht man, nach Möglichkeit nur einen bestimmten, typischerweise den direkten Pfad anzuregen, auf den dann die Sendeenergie konzentriert wird. Beim Richtungsempfang versucht man hingegen, unerwünschte Mehrwegeanteile auszublenden bzw. mittels einer Vielzahl speziell verschalteter Empfangselemente so zu überlagern, dass sie sich gegenseitig auslöschen (mit anderen Worten die Energie der betreffenden Signalanteile vernichtet wird) und möglichst nur eine Mehrwegekomponente des Nutzsignals übrig bleibt. Dieser Signalanteil wird entsprechend verstärkt. Durch das Abgreifen des Empfangssignals an gleichzeitig mehreren Raumpunkten kann ein Antennengewinn erzielt werden. Die Vorteile und Grenzen des empfängerseitigen "Beamformings" lassen sich z.B. anhand der akustischen Datenübertragung unter Wasser veranschaulichen. Auf kurze Distanz konnten hier deutliche Verbesserungen der Empfangsergebnisse erreicht werden. Dazu wurde der Empfänger mit einem Array von Empfangselementen ausgestattet, das über Time Delay Schaltungen eine Eingrenzung und Ausrichtung des Empfangswinkels und damit im gewissen Umfang eine Fokussierung auf bestimmte Multipath Arrivals ermöglicht [z.B. Hinton, O.R. et al.: Performance of a stochastic gradient adaptive beamformer for sub-sea acoustic communication. Signal processing VII: Theories and applications M. Holt, C. Cowan, P. Grant, W. Sandham (eds.), European Association for Signal Processing, 1994: pp. 1540-1543.]. Aufgrund der Winkelverhältnisse funktioniert das jedoch nur bei einem ausreichenden Tiefen-Reichweiten-Verhältnis, d.h. in der Regel nur auf kürzere Distanzen und setzt zudem ausreichend stabile Eigenschaften des Übertragungskanals voraus. Für viele Anwendungen (Mobilfunk etc.) sind richtungsabhängige Sende- oder Empfangssysteme schon aufgrund der Größe und des Gewichtes kaum praktikabel bzw. auch als Grundprinzip nicht zielführend. Hier wäre die Richtungsabhängigkeit oftmals sogar ein Anwendungshemmnis. Im Gegenteil, man strebt die Omnidirektionalität der Sender und/oder Empfänger an. Kompaktantennen müssen sich mehr oder weniger auf einen Raumpunkt beschränken.

Eine weitere Möglichkeit der Störbereinigung der Übertragung besteht in der signaltechnischen Aufbereitung der Empfangssignale ("Signal Processing") im Empfänger.

Generell läuft die Entwicklung zu immer komplexeren Nachbereitungsverfahren mit aufwendigen Entzerrern ("Equalizer"), PLL und komplizierten Korrekturalgorithmen, die dank der DSP-Technik heute auch immer besser umsetzbar sind. Dem Multipath-Problem versucht man insbesondere durch adaptive Laufzeitenzerrung zu begegnen. Zur Echoentzerrung werden beispielsweise Transversalfilter verwendet, in denen die Übertragungseigenschaften des Nachrichtenkanals mit der Korrelationsanalyse bekannter Signalelemente abgeschätzt werden. Dazu wird üblicherweise aufgrund einer Trainingssequenz ein komplex konjugiertes Signal gebildet und als inverse Übertragungsfunktion des Kanals zur Entzerrung mit den nachfolgenden informationsmodulierten Signalsequenzen gefaltet. Bei adaptiven Systemen wird der Entzerrer im Laufzeitausgleich nachgestellt ("Feed Forward Equalisation, FFE"). Alle diese Verfahren arbeiten im Zeitbereich ("Time Domain"). Folglich ist eine adaptive Entzerrung für Nachrichtenkanäle mit zeitvariablen Frequenzverwerfungen auf diesem Wege praktisch nicht möglich. [Meineke; Gundlach: Taschenbuch der Hochfrequenztechnik, Springer-Verlag, Berlin, Heidelberg, New York..., 7. Aufl., 1992: H 21.]

Aus jüngerer Zeit sind verschiedene Versuche bekannt, dieses Problem durch unterschiedliche Kombinationen von FFE, DFE ("Decision Feedback Equqlizer") und/oder PLL (Phase Locked Loop) höherer Ordnung zu lösen. Trotz des z.T. immensen Struktur- und Verarbeitungsaufwandes sind die Ergebnisse bisher noch wenig befriedigend. Die adaptive Nachführung der Entzerrer gelingt nicht bzw. nicht schnell genug und/oder nicht präzise genug, wodurch S/N Verluste bei der Entzerrung unvermeidbar sind.

Eine weitere bekannte Methode zur Verbesserung der Übertragungsergebnisse in verrauschter Umgebung sowie bei - infolge von Mehrwegeausbreitung, beim Mehrfachzugriff etc.- auftretenden Intersymbol-Interferenz-Bedingungen besteht in der Anwendung von Mehrfachmodulationen. In diesem Zusammenhang sind insbesondere die Verfahren zur Signalspreizung (Spread Spectrum Techniques) von Bedeutung, bei denen das modulierte Signal über ein großes Frequenzband gespreizt wird. Dabei bezieht sich der Begriff "Signalspreizung" oder "Sread Spektrum" (SS) sich nicht auf die zu übertragende Information, sondern auf die Trägerstruktur. Aufgrund der großen Bandbreite des Sendesignals können mittels der Spread Spektrum-Systeme auch Übertragungskanäle mit vergleichsweise schlechtem Störabstand belegt werden. Wesentliche Systemeigenschaften sind die Art und Weise der Bandspreizung, die Übertragung des gespreizten Signals sowie die Rücktransformation des gespreizten Spektrums in die erwünschte Original-Informationsbandbreite. Je nach Anwendung werden drei grundlegende Modulationsverfahren eingesetzt: Direct Sequence-Modulation (DS) auch "Pseudonoise-Verfahren" (PN) genannt, Frequency Hopping-Modulation (FH) und CHIRP-Modulation.

Bekannte Vorteile der SS-Verfahren sind: selektive Adressiermöglichkeit, Vielfachzugriff durch Codemultiplex, Nachrichtenverschleierung, erhöhte Störunempfindlichkeit, geringe spektrale Leistungsdichte für Signal- oder Abhörschutz, Eignung für hochauflösende Entfernungsmessverfahren u.a.m.. Die Nachteile bestehen u.a. in den erhöhten Systemanforderungen und mitunter bereitet auch die Synchronisation von Sender und Empfänger Schwierigkeiten. Verzerrungen aufgrund von Mehrwegeausbreitungen können zwar deutlich reduziert werden, verkörpern jedoch immer noch ein Problem.

Im vorliegenden Zusammenhang ist insbesondere die Pulsed FM oder Chirped-Modulation (CHIRP) von Interesse. Sie hat ihre Hauptanwendung in der Radar- und Sonartechnik, wird verschiedentlich aber auch zu Kommunikationszwecken angewendet. Die Besonderheit besteht in der Verwendung gepulster RF-Signale, deren Trägerfrequenz während einer definierten Pulsbreite über einen bestimmten Frequenzbereich kontinuierlich fließend verändert bzw. gewobbelt wird.

Chirps ermöglichen eine günstige Energieverteilung über die Bandbreite, was sie robust gegenüber Störungen macht, eine gute Wiedererkennung und eine Verbesserung des S/N-Verhältnisses (Signal-Rausch-Verhältnis o. "Signal-Noise-Ratio" ). Ein Vorteil dieser Übertragungstechnik besteht in der Möglichkeit, die Sendeleistung bemerkenswert zu reduzieren.

Das Sendesignal kann auf verschiedene Weise erzeugt werden, beispielsweise durch Ansteuerung eines VCO ( Voltage Controlled Oszillator) mit einem linearen Spannungshub. Bei den Chirp-Verfahren werden im wesentlichen linear frequenzmodulierte (LFM) Pulse, verwendet. Ein Verfahren zur Linearisierung von Wobblersystemen, sowie die Bedeutung linearer Chirps insbesondere für die Radartechnik, für Spektrumanalysatoren u.a.m. ist z.B. im Patent DE 195 27 325 A1 beschrieben. Interessant ist, dass die Radartechniker spezielle Marker auf die Signale aufbringen, um die Signalanalyse zu verbessern.

Bei der Nachrichtenübermittlung (mittels Schall-, optischer oder HF-Signale) werden hingegen meist uncodierte Chirps verwendet, die mittels Chirp Generating Filter bzw. frequenzabhängige Verzögerungsleitung ("Dispersive Deay Line, DLL") leicht erzeugt werden können. Als Dispersionsfilter werden in der Regel SAW ("Surface Acoustic Wave") Komponenten eingesetzt. Damit ist die Chirp-Konfiguration bautechnisch festgelegt.

Die digitalen Datenübertragung mittels Chirps beinhaltet im wesentlichen die binäre Unterscheidung zwischen On- und Off-Zuständen, wobei die On-Zustände als Chirps gesendet werden. In US-A-5,748,670 ist eine Technik beschrieben, nach der man zusätzlich noch zwischen aufsteigenden und absteigenden Chirps unterscheiden kann. Zur Erhöhung der Informationsdichte lassen sich ggf. noch die Amplitude und/oder die Phasenlage der Chirps variieren. Das ändert jedoch nichts am Prinzip, dass die Chirp-Modulation an sich nur eine geringe Variationsmöglichkeit der Trägerstruktur bietet, was insbesondere für den Vielfachzugriff in Multi-User-Systemen nachteilig ist.

Bekanntermaßen hat jedes der erwähnten Spread Spektrum Verfahren seine spezifischen Vor- und Nachteile. Sie lassen sich jedoch auf vielfältige Weise kombinieren. Mittels hybrider Verfahren können gegenüber den Einzelverfahren verbesserte Systemeigenschaften erreicht werden, wobei sich der Systemaufwand nicht unbedingt verdoppeln muss. Die bekanntesten Hybridsysteme sind: Frequency Hopping/Direct Sequence FH/DS bzw. FH/PN, Time Frequency Hopping TH/FH, Time Hopping/Direct Sequence TH/DS, Chirp/FH und Chirp-PN-PSK. Dabei haben z.B. die Chirp-PN-PSK-Systeme durch die PN-Modulation eine große Signalformvielfalt und durch die Chirp-Modulation eine geringe Degradation bei Mittenfrequenzverschiebungen z.B. durch Doppler- oder Frequenz-Abweichungen zwischen Sender und Empfänger).

Der Vollständigkeit halber sei auch erwähnt, dass bekanntermaßen im Mobilfunk auch mit Verfahren experimentiert wird, bei denen den auf herkömmliche Weise modulierten Informationssignalen eine Präambel von Chirps vorangestellt wird, wobei dieser "Header" die Synchronisation von Sender und Empfänger erleichtern soll. Umgekehrt gibt es auch Verfahren, bei denen schmalbandige Header mit konstanter Trägerfrequenz mit nachfolgenden LFM Sequenzen kombiniert werden (zeitliche Aneinanderreihung von LFM Sequenzen und anderen Signalformen).

Die oben genannten Modulationsverfahren beziehen sich zum größten Teil auf pulsförmige Signale und fallen in die Kategorie der nicht-kohärenten Übertragungsmethoden, die gegenüber Störungen besonders robust sind, dafür aber eine Übertragung mit nur vergleichsweise geringer Datenrate ermöglichen. Um den ständig wachsenden Anforderungen bezüglich der Bitraten und des Multi-User-Betriebes gerecht zu werden, müssen jedoch alle Möglichkeiten zur Verbesserung der Kanalauslastung und des Datendurchsatzes in Betracht gezogen werden. Bekanntermaßen kann durch die Verwendung von phasenkohärenten Signalstrukturen die Übertragungsgeschwindigkeit von Daten erheblich gesteigert werden, was aufgrund der größeren Störanfälligkeit dieser Signale jedoch auch den zur Signalverarbeitung erforderlichen Aufwand weiter in die Höhe treibt bzw. auch andere und/oder spezielle Zusatzmaßnahmen erfordert.

In Fachkreisen ist bekannt, dass im Mobilfunk auch schon mit längeren, phasenkohärent modulierten Signalen experimentiert wird, die in einer weiteren Modulation mit LFM-Signalen gespreizt werden. Letztere erden mittels VCO erzeugt und ohne die für die Chirp-Modulation mittels SAW Filter typische Zeitspreizung und anschließende Zeitkomprimierung übertragen und anschließend verarbeitet. Die LFM Sendesignale werden ohne zusätzlichen Header einzeln nacheinander in vorgegebenen Zeitfenstern gesendet. Da bei diesem Übertragungsverfahren alle Trägerfrequenzen stets den selben Anstieg haben, liegen die Spuren parallel zueinander, wobei die Zeitfenster so bemessen sein müssen, dass sich die Spuren zwar zeitlich teilweise überlagern können, die laufenden Frequenzbänder jedoch stets sauber voneinander separiert sind. Auf dieser Weise können zumindest im HF-Bereich auch schon komplexere Modulationsformen für die Informationscodierung genutzt werden. Mittels der Sweeps wird das Fading reduziert bzw. eliminiert. Bei diesem Verfahren entsteht jedoch im Prozess der Signalaufbereitung ein Problem.

Zum Trennen der Spuren wird das LFM-Empfangssignal zwischenzeitlich in ein schmales Frequenzband mit Festfrequenzen überführt und gefiltert. Anhand des gefilterten Signals wird die Übertragungsfunktion abgeschätzt, das gefilterte Signal selbst wird in die Sweep-Form rücktransformiert (um es als Sweep zu entzerren), dann schließlich vom Sweep demoduliert und als schmalbandiges Signal an die Parameteranalyse weitergeleitet.

Eine Quelle für Komplikationen liegt darin, dass das Entzerrungssignals auf der Grundlage eines zwar schmalbandigen, insbesondere unter Multipath-Bedingungen (um die es ja schließlich geht) jedoch vielschichtig strukturierten Übertragungssignals gebildet wird. Im Fall der Mehrwegeausbreitung beinhaltet dieses Signal stets ein ganzes Spektrum von Einzelfrequenzen. Darauf wird jedoch nicht Bezug genommen. Die Konsequenz ist jedenfalls, dass beim Potenzieren und anschließendem Wurzelziehen zum Entfernen der informationstragenden Modulation ein Frequenz-Mischmasch entsteht, aus dem sich die Übertragungsfunktion nicht sauber ableiten lässt. Je mehr Multipath-Anteile und je größer der Delay Spread, desto stärker macht sich dieses Problem bemerkbar. Falls dann die einzelnen Mehrwegeanteile noch individuelle oder gar zeitvariable Verzerrungen (unterschiedliche Doppler-Belastungen usw.) aufweisen, ist das Chaos perfekt. Die Entzerrungsfunktion wird dann aus einem extrem verschmierten Signal gebildet. Diese Fehlerquelle kann insgesamt mit den im Zeitbereich arbeitenden Entzerrern schwerlich behoben werden, das Interferenzproblem wird im wesentlichen nur verlagert, nicht gelöst.

Bei allen bisher bekannten Verfahren wird die Mehrwegeausbreitung als Nachteil betrachtet, und mit allen verfügbaren signaltechnischen Mitteln bekämpft, statt die Echos als Parallelangebot der Natur zu nutzen. Doch dazu müsste man die Mehrwegeanteile voneinander trennen können. Bei den bisher verwendeten LFM Trägersignalen waren die Frequenzanstiege zu flach und die Strukturen insgesamt zu unflexibel, um von dieser Möglichkeit Gebrauch zu machen. Verschiedentlich wurde schon der Einsatz paralleler Ketten von Equalizern erwogen, um gleichzeitig zwei oder mehr Mehrwegekomponenten nutzen und so einen Systemgewinn und verbesserte Empfangsergebnisse erzielen zu können. Uns ist nicht bekannt, ob derartige Versuche jemals praktisch umgesetzt wurden. Jedenfalls ist angesichts des erforderlichen Aufwandes die Kosten-Nutzen-Relation für breitere Anwendungen höchst fragwürdig.

Generell ist die Kommunikationstechnik bemüht, ein möglichst unbeeinflusstes Abbild des Sendesignals (Nutzsignal) zu erhalten. Grundsätzlich werden alle übertragungsbedingten Veränderungen als Störungen behandelt und dementsprechend zu reduzieren, kompensieren bzw. im Idealfall auch vollständig zu eliminieren versucht. Dabei werden auch die Informationen, die das Sendesignal im Prozess der Übermittlung durch die Übertragungsstrecke aufgenommen hat, verworfen.

Andererseits sendet man jedoch zu Mess- und Ortungszwecken u.a.m. Signale aus, um eben aus den Veränderungen der Signale Informationen über die Umgebung, insbesondere zur räumlich-strukturellen und physikalische Beschaffenheit des Übertragungskanals, über dessen Profil und/oder darin enthaltene Objekte, zur Bestimmung von Positionen und Bewegungsparametern, zu extrahieren. Dafür werden in der Regel uncodierte oder mit speziellen Markern versehene Signale verwendet, wobei die Marker als Hilfsmittel für die Signalverarbeitung dienen, keine Informationen im Sinne der Nachrichtenübermittlung sind.

In der Patentanmeldung PCT/DE99/02628, nach dem Prioritätstag der vorliegenden Anmeldung veröffentlicht (WO 00/11817), wird ein Signalübertragungsverfahren beschrieben, bei dem erstmals komplexe Signalstrukturen verwendet werden, die gleichzeitig mehrere frequenzmodulierte Trägerfrequenzen ("Frequenzgradienten-Kanäle") nutzen. Jeweils einer der Kanäle wird als Referenz zur Demodulation bzw. Decodierung der übrigen Kanäle (Informationskanäle) herangezogen. Es ist jedoch für einige Anwendungen nicht erforderlich oder auch nachteilig, wenn zur Informationsübertragung mindestens zwei Kanäle.benötigt werden, von denen einer nur als Kanal für ein Referenzsignal verwendet wird, ohne zur Übertragung von Information an sich beizutragen.

Weitere Signalübertragungsverfahren in komplexen Kommunikationssystemen sind in EP 942 538, JP 10 126382 A, WO 99/63501 und US 5 278 862 beschrieben.

Die Aufgabe der vorliegenden Erfindung ist es, ein verbessertes Verfahren bzw. ein geeignetes System zum Übertragen und Empfangen von Informationen bereitzustellen, das insbesondere im Vergleich zur Signalübertragung mit mehreren Frequenzgradienten-Kanälen vereinfacht ist und das eine hohe Übertragungsqualität gewährleistet, robust gegenüber den oben genannten Störungen ist und an unterschiedliche Übertragungsbedingungen angepasst werden kann.

Das Verfahren bzw. System zum Übertragen und Empfangen von Informationen soll insbesondere durch eine verbesserte Qualität der Signalverarbeitung und der Wiedererkennung der informationstragenden Signalparameter eine hohe Bitrate ermöglichen und fähig sein, in einem gegebenen Frequenzband gleichzeitig bzw. zeitlich überlappend eine Vielzahl von Informationssignalen zu übertragen und so z.B. die verfügbaren Frequenzbänder besser auszunutzen. Im gleichen Kontext soll auch eine Möglichkeit zur parallelen Nutzung von zwei oder mehr Frequenzbändern geschaffen werden.

Das Verfahren bzw. System zum Übertragen und Empfangen von Informationen soll zudem insbesondere eine variable Signalerzeugung und Signalverarbeitung bereitstellen, die es ermöglicht, die Signalstrukturen verschiedenen Spezialaufgaben anzupassen, die Empfangssignale nach unterschiedlichen Gesichtspunkten auszuwerten, insbesondere Mehrwegekomponenten einzeln, parallel oder auch im Gesamtkomplex zu verarbeiten, um für die Informationsübertragung einen zusätzlichen Verfahrensgewinn zu erzielen und/oder aus dem Empfangssignal Informationen über die Umgebung zu extrahieren, die das Signal im Übertragungsprozess aufgenommen hat.

Diese Aufgaben werden durch Verfahren mit dem Merkmalen gemäß Anspruch 1 oder 29 und Vorrichtungen mit den Merkmalen gemäß Anspruch 30 oder 35 gelöst. Vorteilhafte Ausführungsformen und Anwendungen der Erfindung ergeben sich aus den abhängigen Ansprüchen.

Die Grundidee der Erfindung besteht in der Bereitstellung ausschließlich eines Übertragungssignals in Form einer Trägerwelle, deren Frequenz in einem vorbestimmten Zeitintervall in vorbestimmter Weise fließend verändert oder gewobbelt wird und die ein aufgeprägtes Informationssignal trägt. Bei der Übertragung der Trägerwelle ist keine Übertragung eines Referenzsignals vorgesehen. Die Übertragung erfolgt frei von Bezugskomponenten. Die Auswertung des Übertragungssignals hinsichtlich der informationstragenden Signalparameter erfolgt aus sich heraus, da heißt ausschließlich auf der Grundlage der im übertragungssignal enthaltenen Informationen. Es werden bei der Auswertung keine weiteren gesondert empfangenen Signale, also auch keine Referenzsignale, verwendet.

Aus signaltechnischer Sicht sind in diesem Zusammenhang zwei unterschiedliche Betrachtungsweisen möglich, die gleichermaßen in die Erfindung einbezogen sind. Zum einen kann man die kontinuierlich fließende Frequenzveränderung als eine bestimmte Form der Spreizung eines an sich vorhandenen Informationssignals betrachten, was allgemein unproblematisch ist, wenn dieses Informationssignal selbst schon eine Trägerwelle besitzt. Andererseits ist es aber auch denkbar, dass das Informationssignal lediglich die Vorgaben für die Modulation einer Trägerwelle, beispielsweise in Form einer sogenannten Basebandmodulation enthält, die dann dem Trägersweep unmittelbar aufgeprägt wird.

Für die vorliegende Erfindung ist wesentlich, dass durch die fließende Frequenzveränderung bestimmte Eigenschaften in den Übertragungsprozess eingeführt werden, die sich vorteilhaft nutzen lassen. Ein wesentlicher Teil der verfahrens- und vorrichtungstechnischen Maßnahmen der vorliegenden Erfindung bezieht sich in erster Instanz auf die speziellen Eigenschaften sowie die Behandlung, Aufbereitung bzw. Verarbeitung der als Sweep ausgebildeten Trägerfrequenzen, wobei es zum Teil von zunächst eher noch untergeordneter Bedeutung ist, ob und in welcher Form diese Sweeps im einzelnen noch feinmoduliert sind, sofern die betreffenden Modulation die Charakteristik der Sweeps nicht grundlegend verändert. Demzufolge konzentriert sich die nachfolgende Beschreibung auf eine Betrachtungsform in der die Sweeps als grundlegende Trägerelemente der Signale angesehen werden, womit aber anderweitige Betrachtungsformen keinesfalls ausgeschlossen werden sollen.

In dieser Beschreibung wird eine Welle, deren Frequenz in einem vorbestimmten Zeitintervall kontinuierlich fließend verändert wird, allgemein als "Sweep" bzw. auch "Trägersweep" bezeichnet. Diese Bezeichnungen stehen als Synonyme für die in der nachveröffentlichten Patentanmeldung PCT/DE99/02628 (WO0011817) eingeführten Begriffe der "Gradient-Trägerwelle, GTW" bzw. die in der internationalen Fachliteratur anzutreffende Bezeichnungen wie z.B. "gewobbelte Frequenz" oder "swept-frequency carrier". Der Einfachheit halber wird Sweep als eingedeutschtes Wort behandelt, woraus sich dann "sweepen" als Verb zur Beschreibung der Ausführung einer kontinuierlich fließenden Frequenzveränderung (Synonym z.B. für "wobbeln") ableitet und das Eigenschaftswort "gesweept" dafür steht, dass eine kontinuierlich fließende Frequenzveränderung vorliegt (beispielsweise auch als Synonym für "gewobbelt").

Das vorliegende Verfahren, das auf der Verwendung einer Trägerwelle mit kontinuierlich fließender Frequenzveränderung beruht, wird hier auch als "Floating Frequency Technology" oder "F2-Technology" bzw.- in Anlehnung an die international gebräuchliche Terminologie - "Sweep Spread Technology" oder "S2-Technology" bezeichnet. Für die Anwendung zu Kommunikationszwecken stehen Kurzbezeichnungen wie "F2-Communication" bzw. "S2-Communication" oder "S2C".

Mittels der Frequenzveränderung wird im Unterschied zu Signalen mit konstanter Trägerfrequenz eine zusätzliche Variable, d.h. eine zusätzliche Dimension eingeführt, was neben einer vorteilhaften Verteilung der Signalenergie im gespreizten Frequenzband (Spread Spektrum) vor allem auch bewirkt, dass sich im Übertragungsprozess möglicherweise auftretende Mehrwegekomponenten nicht mehr so leicht überlagern können. Der Zeitversatz (Delay Spread) stellt sich nunmehr als eine Verschiebung im Zeit-Frequenz-Bereich dar, in dem die betreffenden Komponenten nebeneinander, typischerweise bei der LFM parallel zueinander, liegen, wobei ihr relativer Abstand eine Funktion der Laufzeitdifferenz und des Frequenzanstieges des jeweiligen Trägersweeps ist. Die Laufzeitdifferenz ist naturbedingt und verfahrenstechnisch kaum zu beeinflussen, wohl aber der Frequenzhub (Frequenzanstieg bzw. Frequenzgradient). Damit wird deutlich, dass die Konfiguration der Trägersweeps in dem erfindungsgemäßen Verfahren als Instrument genutzt werden kann, mittels dessen der Abstand bzw. die "Packungsdichte" der Komponenten im Zeit-Frequenz-Bereich beeinflusst und die Interferenz reduziert bzw. vermeiden werden kann.

Erfindungsgemäß wird das Signal nach dem Empfang in eine andere Frequenzform überführt bzw. transformiert, wobei die Überführung in ein Frequenzband bzw. Spektrum mit sich im Zeitverlauf nicht mehr ändernden, also konstant feststehenden Trägerfrequenzen bevorzugt ist. Eine alternative, praktisch jedoch schwieriger zu realisierende Möglichkeit bildet z.B. das Herausfiltern einer Mehrwegekomponente durch ein mitlaufendes Filter und/oder nachfolgende Multiplikation, Faltung etc. mit einer speziellen Funktion.

Mittels der hier bevorzugten Transformation wird bewirkt, das sich die im Empfangssignal im Zeit-Frequenz-Raum verschobenen Komponenten entsprechen ihren Relativabständen nunmehr auf separaten Festfrequenzen anordnen. Durch diese überraschend einfache Maßnahme wird ein für die Signalverarbeitung sehr wesentlicher qualitativer Effekt erreicht, nämlich dass das Problem der Trennung von zeitversetzten Signalanteilen aus dem Zeitbereich (Time Domain) in den Frequenzbereich (Frequency Domain) verlagert wird. Der gravierende Vorteil besteht darin, dass im Frequenzbereich andere Methoden zur Signalbearbeitung zur Verfügung stehen, die meist bessere Ergebnisse liefern und sich zudem auch wesentlich einfacher realisieren lassen.

Zur Trennung und/oder Bereinigung von diversen Störanteilen können in erster Instanz nunmehr auch schon einfache Filter, beispielsweise Bandpassfilter (BPF) ausreichen. Dabei können wahlweise das oder die Filter an die jeweils interessierenden Frequenzkomponenten angepasst oder auch die betreffenden Komponenten durch geeignete Maßnahmen bei der Transformation, beispielsweise durch Synchronisation einer Hilfsfrequenz mit einer bestimmten Mehrwegekomponente, in einem vorbestimmten Filterfenster zu platzieren. In vielen Anwendungsfällen können mittels einer solchen Bandpassfilterung schon die meisten Probleme gelöst sein. Grundsätzlich besteht bei dem erfindungsgemäßen Verfahren jedoch die Möglichkeit, die Spektralanteile des frequenztransformierten Empfangssignals auch mittels komplexerer Filtersysteme individuell, parallel oder auch im Block weiter aufzubereiten, ggf. auch miteinander zu verrechnen und dann zur Rückgewinnung bzw. Extraktion oder Isolation der informationstragenden Signalparameter auszuwerten. Dafür können die aus der Signalverarbeitung allgemein bekannten Methoden und Verfahren eingesetzt werden, die hier nicht näher beschrieben werden. Es wird jedoch hervorgehoben, dass nach der Aufspaltung des Empfangssignals in ein Spektrum von Festfrequenzen wesentlich verbesserte Ausgangsbedingungen für den Einsatz dieser Methoden bestehen. Im Zuge der Anordnung der Mehrwegekomponenten auf separaten Spektrallinien werden jegliche Formen von Interferenzen und Intermodulationen vermindert bzw. eliminiert.

Bei den bisherigen Verfahren werden meist nur das Fading und die Intersymbol-Interferenz als ein zu behandelndes Problem angesprochen. Ein wesentlicher Teil der Komplikationen bei der Entzerrung von Signalen mit Mehrwegeanteilen resultiert aber auch aus den individuellen und noch dazu meist zeitvarianten Frequenz- und Phasenverzerrungen, beispielsweise infolge der unterschiedlichen Doppler-Belastung. Die Intermodulationen der diversen Doppleranteile komplizieren die Bildung der Übertragungsfunktionen, bewirken extrem kurze Kohärenzzeiten. Einfache Equalizer sind zu kurz, um Entzerrungsfunktion präzise genug erstellen zu können, längere Equalizer zu träge, um den Veränderungen folgen zu können, d.h. bildlich gesprochen, sie brechen zusammen. Beim F2-Verfahren werden diese Intermodulationen auf bestmögliche Weise vermieden. Die Entzerrung kann für Einzelkomponenten vorgenommen werden, was die Aufgabe wesentlich vereinfacht, den erforderlichen verfahrens- und gerätetechnischen Aufwand in vorteilhafter Weise reduziert und deutlich bessere Ergebnisse liefert. Einige bevorzugte Verarbeitungsvarianten sowie verfahrensspezifische Weiterentwicklungen werden im Zusammenhang mit den abhängigen Ansprüchen beschrieben.

Es wird betont, dass das erfindungsgemäße Verfahren die Möglichkeit beinhaltet, dem Empfangssignal eine Vielzahl unterschiedlicher Informationen zu entnehmen bzw. die in dem Sende- oder Empfangssignal enthaltenen Informationen und/oder Modulationen auf unterschiedliche Weise zu nutzen. Es liegt im Ermessen des Anwenders, inwiefern, bzw. auf welche Weise er von diesen Möglichkeiten Gebrauch macht.

Eine bevorzugte Anwendung beinhaltet die Übermittlung von Informationen zwischen Sender und Empfänger. Gleichzeitig oder auch unabhängig davon können die Empfangssignale aber auch bezüglich der ihnen in der Übertragungsstrecke aufgeprägten Veränderungen ausgewertet werden, die dem Empfänger eine Fülle von gleichermaßen wertvollen Informationen über die Eigenschaften und Beschaffenheit der Umgebung zutragen. Beispielsweise kann anhand einer Analyse des Frequenzspektrums des frequenztransformierten Empfangssignals die Güte einzelner Verbindungspfade ermittelt und im Übertragungsprozess berücksichtigt werden (beispielsweise zur Verbesserung der Position von Sender oder Empfänger, Fokussierung von Antennen etc.). Darüber hinaus kann der Fachmann den Signalen bei entsprechender Verarbeitung aber auch eine Vielzahl anderweitiger Messwerte entnehmen. Dabei kann das senderseitig aufmodulierte Informationssignal u.a. auch als Marker genutzt werden, somit die Auswertung unterstützen. Unter diesem Aspekt lassen sich auch Modulationsformen auswählen die für einen oder beide der genannten Aspekte besonders geeignet sind. Verschiedene, im erfindungsgemäßen Verfahren vorteilhaft anwendbare Modulationsverfahren werden im Rahmen der Ausführungsformen benannt.

Die Trägerwelle kann als Schallwelle in einem festen, flüssigen oder gasförmigen Trägermedium oder als elektromagnetische Welle (z. B. HF-Signale, Lichtwellen) ausgebildet sein. Die Frequenzänderung kann in der einfachsten, für viele Anwendungen vorteilhaften Form in einem gegebenen Zeitintervall linear oder nach einer anderen geeigneten stetigen, vorzugsweise monotonen, Funktion oder auch z. B. nach einer Gaußfunktion erfolgen. Da die Breite des verfügbaren bzw. nutzbaren Frequenzbandes in der Regel begrenzt ist, muss sich das Vorzeichen der Frequenzänderung der Trägerwelle spätestens am Ende des betreffenden Zeitintervalls umkehren (Wendepunkt) oder es muss wieder neu angesetzt werden, beispielsweise wieder bei der Ausgangsfrequenz. Damit untergliedert sich die Trägerwelle in verschiedene Abschnitte, die als Sweep, bzw. - um deutlich hervorzuheben, dass es sich hierbei zunächst nur um die Strukturelemente der Trägerwelle (des Carriers) handelt - als Trägersweep bezeichnet werden.

Gegenstand der Erfindung sind sowohl Sende- als auch Empfangsverfahren auf der Basis des oben erläuterten Prinzips.

Zum Senden wird den Trägersweeps bzw. der Gradient-Trägerwelle (GTW) die zu übertragende Information aufgeprägt, d.h. die betreffenden Signalparameter werden entsprechend der vom Anwender gewählten Codierungsmethode moduliert. Die modulierte Trägerwelle wird als F2-Signal bzw. S2-Signal bezeichnet.

Gemäß einer bevorzugten Ausführungsform der Erfindung verkörpert die Trägerwelle eine Serie gleichförmiger Sweeps, die ggf. auch zeitlich voneinander getrennt sein können. Die Abstände können z.B. für das Abklingen verspätet eintreffender Mehrwegekomponenten oder anderweitiger Kanalantworten (bei akustischen Signalen als Nachhall bezeichnet) vorteilhaft sein. Die Möglichkeit, die Sweep-Abstände variabel zu gestalten, kann z.B. für das Aufgliedern der Information in einzelne Informationspakete genutzt werden. Sie liefert weiterhin eine Basis für den Einsatz in Multi-User-Systemen.

Erfindungsgemäß können die Trägersweeps die verschiedensten Variationen zeigen und flexibel an unterschiedlichste Übertragungsbedingungen und Aufgaben angepasst sein. Beispielsweise können sich in geeigneten Zeitabständen aufsteigende und absteigende Trägersweeps abwechseln oder die Sweeps können so konfiguriert werden, dass sich für den Frequenzgang der Trägerwelle insgesamt ein geschlossener, über das Frequenzband oszillierender Verlauf ergibt. Es kann auch ein Multiplexen auf einem oder mehreren Frequenzbändern vorgesehen sein, indem von Sweep zu Sweep die Frequenzlage (Anfangsfrequenz) der Trägersweeps verändert wird.

Gemäß einer weiteren Ausführungsform der Erfindung ist vorgesehen, durch die Unterteilung der Trägersweeps in jeweils zwei oder mehr Modulationszeittakte (MZT) ggf. variabler Länge eine höhere Bitrate zu erreichen. Gemäß einer Gestaltung werden nicht die Absolutwerte der Signalparameter sondern deren relative Veränderungen von Modulationstakt zu Modulationstakt für die Informationscodierung genutzt, wodurch eine höhere Stabilität der Datenübertragung beispielsweise gegenüber dynamischen Störeinflüssen erreicht wird.

Zur optimalen Ausnutzung eines gegebenen Frequenzbandes können erfindungsgemäß parallel mehrere Signale (mehrere modulierte Sweeps) übertragen werden. Gegebenenfalls kann diese Ausführungsform auch dahingehend genutzt werden, dass anstelle des Multi-User-Betriebes, bzw. in Kombination mit diesem, die Sweeps ein und desselben F2-Signals so zusammen geschoben werden, dass sie sich zeitlich überlappen. Weiterhin ist es auch möglich, für ein Signal gleichzeitig zwei oder mehrere Sweeps mit unterschiedlicher, beispielsweise gegenläufiger Frequenzcharakteristik (Kreuzsweeps etc.) zu übertragen, und damit die Informationsrate zu verdoppeln bzw. zu vervielfachen. Diese Variante beinhaltet somit eine ganze Reihe von Möglichkeiten zur Steigerung der Übertragungsrate in einem gegebenen Frequenzband.

Bei einer für verschiedene Anwendungen vorteilhaften Gestaltungsform ist insbesondere vorgesehen, dass die Trägerwelle jeweils in zwei oder mehrere Abschnitte bzw. Intervalle, mit unterschiedlicher Frequenzcharakteristik untergliedert ist. Dabei ist zumindest einer dieser Abschnitte als Sweeps ausgebildet. Dieser Sweep kann nun in einer Übertragungssequenz zeitlich-überlappend oder auch gleichzeitig mit anderen Signalabschnitten übertragen werden, beispielsweise mit einem frequenzversetzten, ansonsten aber gleich strukturierten Trägersweep und/oder in Kombination mit einem Abschnitt mit konstanter Trägerfrequenz und/oder mit einem oder mehreren Trägersweeps, die einen anderen, vorzugsweise gegenläufigen, Anstieg und/oder auch einer anderen Sweep-Form aufweisen. Obwohl sich das bereits aus dem bisherigen Zusammenhang ergibt, sei hier nochmals explizit erwähnt, dass es im Spielraum des Verfahrens liegt, die aus zwei oder in- oder übereinander geschobenen Trägerabschnitten gebildeten Übertragungssequenzen ebenso, wie zuvor schon für einzelne Trägerelemente beschrieben, als geschlossene Folge, in verschiedenen Gruppierungen oder als_eigenständige "Pakete" in einem einheitlichen Frequenzband oder auch variabel im Zeit-Frequenz-Raum anzuordnen.

Die Fülle der Gestaltungsmöglichkeiten resultiert aus der im erfindungsgemäßen Verfahren gegebenen Trennbarkeit unterschiedlich konfigurierter bzw. im Zeit-Frequenz-Bereich ausreichend beabstandeter Signalanteile, inklusive der empfangenen Mehrwegekomponenten. Dieses Instrumentarium lässt sich nun auf unterschiedliche Weise nutzen. Beispielsweise kann mittels geeigneter Modulationen die Übertragung von Informationen schneller und/oder zuverlässiger gemacht werden, bzw. auch die Bestimmung von Umgebungsparametern verbessert werden. Neben der Möglichkeit, das Informationssignal mehr oder weniger gleichmäßig auf die betreffenden Trägerabschnitte zu verteilen, kann es mitunter auch von Vorteil sein, ein Symbol in zwei oder mehreren Abschnitten zu verschlüsseln, oder mehreren Abschnitten die gleiche Information aufzuprägen. Damit können z.B. Ausfälle vermieden, Korrekturalgorithmen unterstützt, Marker für die Signalverarbeitung gesetzt und/oder bestimmte Abschnitte als Referenz für die Signalauswertung bereitgestellt werden. Im zuletzt genannten Fall kann für die betreffenden Teile ggf. auch ganz auf eine Modulation im Sinne der Informationsübertragung verzichtetet werden.

Diese Variationsvielfalt der Zeit- und Frequenzmuster lässt sich vorteilhafterweise zur Unterscheidung, Trennung bzw. Analyse von Signalen beim Mehrfachzugriff, d.h. für den Multi-User-Betrieb in dem gegebenen Frequenzband, nutzen.

Die Sweeps bzw. Trägersegmente der F2-Signale werden vorzugsweise nach einem bestimmten Protokoll konfiguriert, das sowohl für den Sender als für den Empfänger festgelegt ist. Dieses Protokoll kann beispielsweise für jedes Nutzerpaar unterschiedlich sein, womit insbesondere im Multi-User-Betrieb auf einem gemeinsamen Frequenzband die Gefahr der gegenseitigen Beeinflussung der Signale reduziert wird. Falls hingegen für mehrere F2-Signale im Parallelbetrieb eine gleichartige Sweepkonfiguration verwendet wird, kann das Übertragungsprotokoll beispielsweise dazu dienen, durch Einrichtung bzw. Zuweisung von Zeitfenstern (Time Slots) eine geeignete zeitliche Staffelung herbeizuführen. Es kann auch eine operative Anpassung an die jeweils gegebene Übertragungssituation, an spezielle Erfordernisse der Anwendung oder die Wünsche der Betreiber vorgesehen sein. Veränderliche Übertragungsprotokolle können beispielsweise zum Erreichen einer besseren Empfangsqualität, für eine effektivere Ausnutzung des jeweiligen Frequenzbandes, zur Vermeidung von Wartezeiten, zur Umschaltung auf ein anderes Frequenzband oder auch zur Verminderung der Gefahr einer Fremddetektion bzw. des Abhörens etc. hilfreich sein.

Die erfindungsgemäßen Verfahren ermöglichen in einer weiteren Ausführungsform auch Kombinationen mit anderen, in der Praxis bereits bewährten Modulationsverfahren, insbesondere auch den bekannten Spread Spectrum Verfahren. So kann es für eine Reihe von Anwendungen vorteilhaft sein, die Möglichkeit der Mehrfachmodulation gemäß den Direct Sequence-Verfahren oder PN Verfahren zu nutzen, um beispielsweise die Übertragung noch störunempfindlicher zu machen, die Formenvielfalt weiter zu erhöhen, die Kanalkapazität zu erhöhen, die Möglichkeiten für den Mehrfachzugriff weiter zu verbessern, Signale bzw. Nachrichten zu maskieren oder zu verschleiern u.a.m..

Der erfindungsgemäße Empfänger ist dazu eingerichtet, die vom Sender abgegebenen Signale zu empfangen, entsprechend zu verarbeiten und auszuwerten. Die Auswertung gemäß einem vorgegebenen bzw. im Übertragungsprotokoll vereinbarten bzw. Zeit - und/oder Frequenzmuster ermöglicht, ein bestimmtes Informationssignal aus dem empfangenen Spektrum zu isolieren und insbesondere auch im Zeit-Frequenz-Bereich verteilte Anteile zweckdienlich zusammenzufügen. Insbesondere bei mehrfachmodulierten, beispielsweise PN-modulierte, Signalen kann das Muster aus verschiedenen Teilmustern zusammengesetzt sein, die in geeigneter Weise, in der Regel nacheinander, angewendet werden. Vorteilhafterweise werden im Zuge der Separierung bzw. Demodulation verschieden Störanteile abgeschwächt bzw. eliminiert, was hinsichtlich der Informationsübertragung im allgemeinen als "Modulationsgewinn" gewertet wird.

Das erfindungsgemäße Verfahren sieht standardmäßig vor, das F2-Signal nach Empfang in eine andere Frequenzform, z. B. in ein konstant feststehendes Frequenzband zu überführen bzw. zu transformieren. Dieses erfolgt beispielsweise durch Mischen bzw. Multiplikation mit einer künstlich erzeugten Hilfsfrequenz (Heterodynefrequenz), die den gleichen Frequenzgang wie die Trägerwelle (GTW) des Sendesignals aufweist, gegenüber dieser aber parallel verschoben ist, so daß die Frequenz der Trägerwelle des transformierten Signals konstant fest steht. Alternativ dazu kann die Transformation auch mittels einer Heterodynefrequenz mit in Bezug auf das Sendesignal gegenläufigem Frequenzgang erfolgen, parallel verschoben sein kann oder auch im selben Frequenzband liegen kann. Diese Varianten lassen sich ggf. zur Bearbeitung komplexerer Signalstrukturen auch vorteilhaft kombinieren, beispielsweise um transformierte Signalabschnitte oder -komponenten in unterschiedlichen Spektralbereichen anzuordnen. Ebenso liegt es im Spielraum des Verfahrens, die Überführung in Festfrequenzen in mehreren Stufen durchzuführen, beispielsweise um das Ergebnis iterativ zu verbessern oder auch zeitvariante Veränderungen bestimmter Zielkomponenten auszugleichen.

Die zur Sweep-Demodulation durchgeführte Frequenztransformation hat neben der Aufgliederung von Mehrwegekomponenten in schmalbandige Spektrallinien auch einen weiteren vorteilhaften Effekt. Dieser besteht darin, dass die im Empfangssignal über das Frequenzband gespreizte Energie der Signalkomponenten nunmehr in den betreffenden Frequenzzellen zusammengeführt wird. Im gleichen Prozess werden ggf. im Empfangssignal enthaltene schmalbandige Störanteile gespreizt, deren Energie wird verteilt. In Abhängigkeit von der zur Übertragung gewählten Spreizung kommt es somit in diesem Bearbeitungsschritt zu einer Anhebung des S/N Verhältnisses, und damit zu einem Modulations- bzw. Systemgewinn.

Bei der Erzeugung der Hilfsfrequenz wird ggf. eine Dopplerfrequenzverschiebung im Übertragungskanal berücksichtigt. Nach der Überführung in die andere Frequenzform kann nunmehr eine vorteilhafte Weiterbearbeitung im Frequenzbereich, ggf. eine Filterung zum Separieren von Einzelfrequenzen bzw. Bereinigen von Störanteilen, sowie die Auswertung erfolgen.

Eine Grundvariante sieht vor, aus dem Spektrum der in dem transformierten Signal, insbesondere infolge von Mehrwegeausbreitungen, enthaltenen Einzelfrequenzen die jeweils am besten geeignete zu isolieren und auszuwerten. Die Eignung kann durch unterschiedliche Kriterien bestimmt sein, beispielsweise durch schaltungstechnische Vorgaben. Wichtige Selektionskriterien sind vor allem die Stärke der jeweiligen Einzelfrequenzen und/oder ihr Abstand zu den Nachbarfrequenzen. In vielen Fällen kann die isolierte Frequenz unmittelbar ausgewertet werden. In einer weiteren Ausbaustufe kann, typischerweise nach der Isolation, eine zusätzliche Filterung im Zeitbereich, insbesondere mittels adaptiver Filter wie beispielsweise Equalizer, und/oder einer adaptiven Phasenkorrektur, insbesondere mittels PLL, durchgeführt werden, beispielsweise um die Rekonstruktion des Sendesignals zu verbessern und/oder Parameter besser bestimmen zu können. Ein wesentlicher Vorteil des erfindungsgemäßen Verfahrens besteht darin, dass nach der Überführung in Festfrequenzen die Kompatibilität zu den bekannten Methoden und Verfahren der Signalverarbeitung gegeben ist, somit je nach Erfordernis eine nahezu beliebige Auswahl von Einzeloperationen bzw. auch komplexer Aufbereitungen, Feedforward- oder Feedback-Verfahren integriert werden kann, mittels derer praktisch alle Signalparameter im Frequenzbereich, Zeitbereich und /oder beliebigen anderen Projektionsebenen angesprochen, be- oder verarbeitet, bzw. ausgewertet werden können.

Die Analyse erfolgt beispielsweise zum Demodulieren von phasenmodulierten F2-Signalen mittels Zerlegung auf empfängerseitig erzeugten Hilfskomponenten (Hilfsschwingungen, Quadraturkomponenten, PLL, FFT oder einer Flip-Flop-Schaltung) wobei beispielsweise der Phasenunterschied zwischen zwei, vorzugsweise benachbarten Modulationszeittakten bestimmt wird.

Bei einer weiteren Ausführungsform ist vorgesehen, dass dem aus dem Spektrum der in dem transformierten Signal enthaltenen Einzelfrequenzen nicht nur eine, sondern jeweils zwei oder mehrere Frequenzkomponenten isoliert und vorzugsweise in getrennten Verarbeitungskanälen oder auch nacheinander in einem Verarbeitungskanal ausgewertet werden. Die Auswertungsergebnisse, beispielsweise von verschiedenen Mehrwegekomponenten, können dann miteinander verglichen bzw. verrechnet werden. So können z.B. bereits schon einfache Maßnahmen, wie die Bildung der Mittelwerte aus den jeweiligen Signalparametern ggf. mit Wichtung entsprechend der Stärke der betreffenden Komponenten, die Streubreite der Endresultate erheblich einengen, was die Bitfehlerrate (BER) vermindert, bzw. auch den Einsatz komplexerer Modulationsverfahren (beispielsweise Phasenmodulationen mit mehr Digitalstufen) genutzt werden. Damit kann mittels des F2-Verfahrens erstmals ein Nutzen aus der Mehrwegeausbreitung gezogen werden, der als "Mutipath-Gewinn" bezeichnet sei.

Eine Weiterbildung des Verfahrens beinhaltet, dass aus dem Spektrum der in dem transformierten Signal enthaltenen Einzelfrequenzen jeweils zwei oder mehrere Frequenzkomponenten isoliert und relativ zueinander so verschoben und frequenztransformiert werden, dass die Trägerwellen kohärent sind, dann miteinander verrechnet, insbesondere übereinander projiziert bzw. addiert, werden und anschließend analysiert werden. Der Vorteil dieser Verarbeitungsweise besteht vor allem in der Zusammenführung der Signalenergie der betreffenden Anteile, so dass im Ergebnis ein wesentlich stärkeres Signals für die Auswertung zur Verfügung steht. Zudem besteht ein weiterer wichtiger Effekt darin, dass zwar im gleichen Zuge auch die Rauschanteile der Komponenten summiert werden, dieses aber nicht zwangsläufig zu einer summarischen Anhebung des Rauschpegels führt. Da insbesondere bei der Mehrwegeausbreitung jede Mehrwegekomponenten ihren eigenen Rauschanteil mitbringt, kommt es bei der Überlagerung zu einer entsprechenden Nivellierung der Energieanteile des Rauschspektrums. Natürlich ist bei der Nutzung von Echos als Parallelangebot der realen Umgebung zu berücksichtigen, dass die Mehrwegekomponenten von unterschiedlicher Qualität sein können, in der Regel auch unterschiedlich stark empfangen werden. Nichtsdestotrotz kann mit dem hier beschriebenen Grundprinzip, das sich anwendungsabhängig weiter ausbauen und beliebig verfeinern lässt, nochmals eine erhebliche Verbesserung des S/N Verhältnisses erreicht und der Multipath-Gewinn gesteigert werden.

Als vorteilhafte Wirkung ergibt sich bei dem zuletzt beschriebenen Überlagerungsverfahren, dass die zur kohärenten Anpassung der Komponenten ermittelten bzw. verwendeten Korrekturparameter Informationen über die räumlich-strukturelle und physikalische Beschaffenheit des Übertragungskanals beinhalten, die gewissermaßen schon weitgehend aufbereitet sind. Die Weiterverarbeitung und Auswertung zur Extraktion solcher Informationen verkörpert eine Gestaltungs- bzw. Ausbaumöglichkeit des erfindungsgemäßen Verfahrens.

Eine weitere, für zahlreiche Anwendungen insbesondere zur Informationsübertragung vorteilhafte Gestaltung des Verfahrens beinhaltet die Ausbildung der Empfangsseite in Form eines sogenannten "Blind Receivers". Dazu wird eine spezielle Form der Signalverarbeitung bereitgestellt, die als "binde" Signalverarbeitung (*englisch: "blind signal processing"*) bezeichnet wird. "Blind" bedeutet in diesem Zusammenhang, dass auf spezielle Maßnahmen zur exakten zeitlichen Synchronisation von Sender und Empfänger verzichtet werden kann, der Empfänger ohne zusätzliche Anpassungsmassnahmen zur Synchronisation automatisch das für ihn bestimmte Signal erkennt und auswertet. Als spezifische Besonderheit des F2-Verfahrens kommt neben einer automatisierten Sweep-Demodulation als weitere Option noch hinzu, dass die diversen, im Empfangssignal enthaltenen Mehrwegekomponenten vollautomatisch kohärent gezogen und die Signalenergie aller Komponenten in einem kontinuierlichen schmalbandigen Signal zusammengeführt werden, welches dann zur Auswertung bereitgestellt wird. Dieses Grundprinzip kann verfahrenstechnisch auf unterschiedliche Weise verwirklicht werden.

Eine bevorzugte Ausführung, die insbesondere bei Verwendung von LFM Trägersweeps vorteilhaft eingesetzt werden kann, besteht im wesentlichen aus drei Bearbeitungsstufen bzw. -schritten, die sich einzeln und im Gesamtkomplex beliebig weiter ausbauen lassen. Die Grundidee beinhaltet folgende Merkmale: a) Projektion des Empfangssignals auf zwei unterschiedliche Hilfsfrequenzen (Sweeps) zur Erzeugung von zwei separaten Frequenzspektren mit intern (d.h. innerhalb der Spektren) spiegelverkehrter Anordnung der konstantfrequenten Spektralemente, ggf. Phasentransformation eines oder beider Spektren; b) Eliminieren des Delay Spreads unter Ausnutzung des funktionellen Zusammenhangs zwischen den Laufzeitverschiebungen und den Frequenzverschiebungen, ggf. auch Entzerrung individueller Frequenz- bzw. Phasenverwerfungen, zur Feinsynchronisation der Elemente in beiden Spektren; und c) Multiplikation der beiden Spektren miteinander zur Konzentration der Signalenergie der Einzelelemente in der Frequenzzelle der neuen Zentralfrequenz und zur Zusammenführung der Einzelelemente zu einer kontinuierlichen Welle mit der neuen Zentralfrequenz. Danach wird die Zentralfrequenz herausgefiltert und ausgewertet. Weitere Einzelheiten werden unten anhand von Figuren erläutert.

Das o.g. Verfahren ermöglicht eine Maximierung des S/N-Gewinns aus der Nutzung der Mehrwegeausbreitung. Von großem Vorteil ist auch, dass das Sweep-modulierte Übertragungssignal empfängerseitig wieder zu einer zusammenhängenden Welle zusammengesetzt werden kann. Das sind wichtige Voraussetzungen z.B. für die Steigerung der Übertragungsrate, Übertragungssicherheit etc., lässt sich aber auch anderweitig nutzen, beispielsweise um die im Mobilfunk erforderliche Sendeleistung zu vermindern (längere Lebensdauer der Akkus, verbesserte Gesundheitsverträglichkeit u.a.m.). Mit der Möglichkeit, die Signale blind zu verarbeiten, wird der praktische Einsatz wesentlich vereinfacht. Neben diesen gravierenden Vorzügen bringt die blinde Verarbeitung gemäß der o.g. Grundidee wahrscheinlich aber auch gewisse Einschränkungen bezüglich der nutzbaren Formenvielfalt der Signale, Zeit- und Frequenzmuster mit sich. Weiterhin ist z.B. bei PSK-Modulationen zu berücksichtigen, dass sich bei der Multiplikation der beiden Spektren miteinander die Anzahl der empfängerseitig digital auflösbaren Phasenzustände halbiert. Es dürfte jedoch kein Problem sein, die Codierung des Informationssignals entsprechend anzupassen. Zudem besteht nach dem Aufbau der Verbindung z.B. mittels des Blind-Verfahrens jederzeit die Möglichkeit, Sender und Empfänger beispielsweise "on-fly" zu synchronisieren und dann auf einen anderen Modus umzusteigen.

Eine weitere Ausführungsform beinhaltet Anpassungsmaßnahmen insbesondere auch für kombinatorische Aufgabenstellungen, beispielsweise in der Unterwassertechnik, in der Ortung, Orientierung etc. oftmals mindestens ebenso wichtig sind, wie die Kommunikation. Mit dem erfindungsgemäßen Verfahren wird eine Prinziplösung bereitgestellt, die in der vorgestellten oder ähnlicher Form in vielen Bereichen der Signaltechnik (inklusive HF Bereich, Lasertechnik etc.) nutzbringend eingesetzt werden kann. Insbesondere ist vorgesehen, das anhand der gemäß einer der oben beschriebenen Vorgehensweise demodulierten Information empfängerseitig eine Kopie des Sendesignals und/oder einer Transformation desselben erzeugt wird und dieses künstlich erzeugte Signal, das frei von sämtlichen Störungen, Verzerrungen und sonstigen im Übertragungskanal auftretenden Veränderungen ist, mit dem empfangenen Signal und/oder dessen Verarbeitungsstufen verrechnet wird, um die übertragungsbedingten Veränderungen qualitativ und/oder quantitativ auszuwerten und daraus Informationen über die Umgebung, beispielsweise zur Bestimmung von Positionen und Bewegungsparametern, zur räumlich-strukturellen und physikalische Beschaffenheit des Übertragungskanals, dessen Profil und darin enthaltene Objekte usw., allgemein: jedwede Art von Informationen zu gewinnen, die das Sendesignal im Prozess der Übermittlung durch die Übertragungsstrecke aufgenommen hat. Dabei kann das dem Übertragungssignal senderseitig aufgeprägte Informationssignal wahlweise herausgerechnet oder auch zweckdienlich, beispielsweise als Marker, in die Auswertung einbezogen werden.

Für verschiedene Anwendungen ist es von Vorteil, das auch der Sender zu einer solchen Analyse befähigt werden kann. Dementsprechend ist vorgesehen, die Sendeeinrichtung so zu gestalten, dass der Sender gegebenenfalls vom Übertragungskanal bzw. von in diesem enthaltenen Grenzflächen oder Objekten reflektierte Abbilder oder Komponenten des, typischerweise von ihm selbst ausgesandten, Sendesignals empfängt und diese mit dem ursprünglichen Sendesignal zur Extraktion von Informationen über die Umgebung verarbeitet.

Des weiteren kann vorteilhafterweise beim erfindungsgemäßen Verfahren vorgesehen sein, dass die Informationen über die jeweiligen Eigenschaften und sonstige Beschaffenheit des Übertragungskanals, bei der Signalerzeugung und/oder der Signalverarbeitung berücksichtigt werden, beispielsweise um das Übertragungsergebnis und/oder die Ungebungsanalyse zu verbessern bzw. zu präzisieren oder zu erweitern.

Gegenstand der Erfindung sind auch Sende- bzw. Empfangseinrichtungen zur Realisierung der erfindungsgemäßen Signalübertragung und Systeme bestehend aus Kombinationen derartiger Sende- bzw. Empfangseinrichtungen.

Die Sendeeinrichtung umfasst mindestens eine Generatoreinrichtung zum Erzeugen von Trägerwellen mit einer kontinuierlich fließenden Frequenzveränderung (Trägersweeps, GTW) und entsprechend mindestens eine Modulatoreinrichtung zu deren Modulation.

Die Empfangseinrichtung ist zum Erfassen von Signalen mit Trägersweeps ausgelegt. Sie weist einen Aufbau mit einer Referenzgeneratoreinrichtung zum Erzeugen mindestens eines Hilfssignals mit einer künstlichen Hilfsfrequenz, mindestens einer Mischeinrichtung zur Überlagerung des empfangenen Signals mit dem jeweiligen Hilfssignal, ggf. einer oder mehreren Filtereinrichtungen und mindestens einer Analysatoreinrichtung auf.

Die Erfindung besitzt insbesondere die folgenden Vorteile. Es wird erstmalig die Nutzung von breitbandigen Frequenzkanälen mit sweepmodulierten Signalen realisiert, was über die bestehenden, starr festgelegten Frequenzbänder hinweg einen zusätzlichen Informationstransfer ermöglicht, ohne eine wesentliche Störung der auf Festfrequenzen basierenden Übertragungssysteme zu verursachen. Durch die kontinuierlich fließende Veränderung der Trägerfrequenz der F2-Signale wird eine Nivellierung der Rauscheinflüsse (Mittelung über einen größeren Frequenzbereich) erreicht und die Voraussetzung für eine Verbesserung des S/N-Verhältnisses in der empfängerseitigen Signalaufbereitung geschaffen. Die Modulation der Trägerwelle bzw. Trägersweeps kann anwendungabhängig auf der Basis einer digitalen oder analogen Codierung erfolgen. Im Unterschied zu dem bekannten Chirp-Impuls-Verfahren verkörpern die hier verwendeten Trägersweeps jeweils einen zusammenhängenden Signalabschnitt, was den Einsatz phasenkohärenter Modulationsverfahren und somit eine höhere Informationsrate ermöglicht.

Es werden die Vorteile erzielt, die auch in PCT/DE99/02628 (WO0011817) für die dort beschriebene Signalübertragung erläutert sind. Da die F2-Technologie die bestmögliche Trennung und somit auch die separate Auswertung einzelner Kanalantworten ermöglicht, können die bei der Multipath Propagation auftretenden Überlagerungsprobleme auf ein Mindestmaß reduziert und die bestmögliche Stabilität der Amplituden und Phasenlagen in dem Empfangssignal erreicht werden. Des weiteren werden verschiedene Möglichkeiten bereitgestellt, mittels derer sogar ein Nutzen aus der Mehrwegausbreitung gezogen werden kann. Insbesondere ist von Bedeutung, dass die Signalenergie der zeitversetzt beim Empfänger eintreffenden Mehrwegekomponenten zusammengeführt werden kann. Der auf diesem Wege erreichbare Multipath-Gewinn kann als eine gewisse Parallele zum Antennengewinn, der durch gleichzeitiges Abgreifen des Signals an mehreren Raumpunkten erreicht wird, betrachtet werden, nur dass hier an einem Raumpunkt die zeitliche Staffelung des Mehrfachempfangs (der Echos) genutzt wird. Beide Verfahren lassen sich vorteilhaft kombinieren. Das Hauptanliegen der vorliegenden Erfindung besteht in erster Instanz jedoch in der Bereitstellung des Instrumentarium für eine bevorzugte Kompaktlösung.

Die hohe Qualität der Wiedererkennung eröffnet die Möglichkeit, zum Zweck der Informationsübertragung nunmehr eine wesentlich feinere Variation einzelner oder ggf. auch mehrerer Signalparameter gleichzeitig vorzunehmen. Somit steht es dem Anwender der F2-Technologie frei, die Information der Trägerwelle in Form von analogen Wellensignalen oder auch in Form einer anderen geeigneten Modulationskurve aufzuprägen. Auf diesem Wege lassen sich auch Amplituden-, Phasen-, und/oder Frequenzmodulationen einzeln bzw. in geeigneten Kombinationen dergestalt durchführen, dass diskrete Zustände erzeugt werden, die für die digitale Datenübertragung genutzt werden können. Dabei kann die Möglichkeit zur feineren Unterscheidung diskreter Zustände für eine Steigerung der Bitrate genutzt werden. Außerdem lassen sich aufgrund der Vielfalt der Möglichkeiten für die Parametervariation durch geeignete Kombinationen weitere digitale Zustände realisieren. Die digitale Modulationsform lässt sich vorteilhaft auch für einzelne Sweeps anwenden, was u.a. auch für den Multi-User-Betrieb günstig ist.

Mittels des hier vorgestellten F2-Verfahrens kann im jeweiligen Sendegebiet eine insgesamt ausgeglichenere Empfangsqualität erreicht werden, wobei insbesondere auch für den Einsatz mobiler Sende- und/oder Empfangseinheiten von großem Vorteil sein dürfte, dass die bisher durch Interferenz verursachten Schwankungen (Fading) und vor allem auch die "Funklöcher" entfallen.

Für eine Reihe von Anwendungen ist es von Vorteil, wenn die F2-Signale bei entsprechend breitbandiger Auslegung kaum von außen zu stören sind. So kann beispielsweise der gesamte Frequenzbereich schwerlich durch Störfrequenzen blockiert werden. Weiterhin ist von Vorteil, dass sich bei den Trägersweeps der F2-Signale die Energie (Power Spectral Density) auf einen entsprechend breiten Frequenzbereich verteilt. Aus dem Umstand,-dass jede einzelne Frequenzzelle somit weniger Energie enthält und auch rasch durchlaufen wird, ergibt sich einerseits, dass die F2-Signale für Außenstehende schwerer zu detektieren sind (insbesondere wenn diesen die Struktur der Trägersweeps nicht bekannt ist, oder die Sweepcharakteristik im Übertragungsprozeß verändert wird) und zum anderen, dass sie auch kaum mit anderen Signalen wechselwirken, die beispielsweise auf starr feststehenden Frequenzen gesendet werden oder ebenfalls als F2-Siganle ausgebildet sind, deren Trägersweeps aber einen anderen, z.B. einen gegenläufigen, Frequenzanstieg haben (Kreuzsweeps etc.). Prinzipiell scheint es somit möglich, zusätzlich zu den bestehenden starren Frequenzbändern sogenannte "Sweep-Frequenzkanäle" (F2-Kanäle oder S2-Känäle) zu nutzen, die sich kreuz und quer über eine entsprechend weit gefasste Bandbreite erstrecken. Aus der Möglichkeit zur Kombination mit andren Spread Spectrum Verfahren ergeben sich vorteilhafte Ausbauvarianten mittels derer eine Reihe der genannten Vorzüge sowie auch das Einsatzspektrum weiter ausgebaut werden können.

Weitere Einzelheiten und Vorteile der Erfindung werden aus der Beschreibung der beigefügten Zeichnungen ersichtlich. Es zeigen:
- Fign. 1a, 1b:: Kurvendarstellungen zur Illustration des Zeitverlaufs von Trägersweeps mit linear ansteigenden (a) bzw. abfallenden (b) Frequenzen;
- Fign. 2a, 2b:: Kurvendarstellungen der Wellenbilder von zwei F2-Signalausschnitten;
- Fign. 3a, 3b:: Kurvendarstellungen mit Beispielen zur Überlagerung von Trägerwellen: eines Trägersweeps und eines konstantfrequenten Trägers (a) zwei Trägersweeps mit linear ansteigender bzw. abfallender Frequenz (b), welche zu einem Informationssignal oder auch zu unterschiedlichen Informationssignalen gehören können;
- Fig. 4a, 4b, 4c:: eine schematische Darstellung zur Illustration der spektralen Energiedichteverteilung von überlagerten Signalanteilen sowie der Umverteilung im Zusammenhang mit einer Frequenztransformation: Sweep-gespreiztes Signal (F2-Signal), schmalbandiges Störsignal plus Rauschen (a) Umkehrung der Verhältnisse infolge Transformation (b) transformiertes Nutzsignal plus Rauschanteil nach der Filterung (c);
- Fig. 5:: eine Illustration der Unterteilung eines Trägersweeps in Modulationszeittakte;
- Fig. 6:: eine Illustration des Aufbau einer Mehrfachmodulation beim Erzeugen eines F2-Sendesignals, hier am Beispiel einer Offset-QPSK des Informationssignals, das auf eine LFM Trägerwelle (Sweep) aufmoduliert und gefiltert wird;
- Fig. 7:: ein Beispiel für die Belegung eines Frequenzbandes mit mehreren F2-Signalen;
- Fig. 8:: ein Beispiel für eine zeitliche Anordnung von Trägersweeps eines F2-Signals in einem Frequenzband;
- Fig. 9:: eine Illustration der Verteilung der Trägersweeps eines F2-Signals auf mehrere Frequenzbänder;
- Fig. 10:: eine Illustration der empfängerseitigen Erzeugung einer Hilfsfrequenz;
- Fig. 11:: eine Illustration der empfängerseitigen Projektion der Trägerwelle auf eine Hilfsfrequenz;
- Fig. 12:: eine Illustration der Feinstruktur eines Empfangssignals;
- Fign. 13a, 13b:: Kurvendarstellungen zur Illustration von Spektralanteilen eines frequenztransformierten Empfangssignals;
- Fign. 14a, 14b:: Blockdarstellungen einer Sendeeinrichtung (a) bzw. einer Empfangseinrichtung (b) gemäß der Erfindung;
- Fig. 15:: eine Blockdarstellung einer Empfangseinrichtung gemäß einer Gestaltung der Erfindung;
- Fig. 16:: eine Blockdarstellung einer Sendeeinrichtung zur Erzeugung von F2-Signalen mit zeitlich überlagerten Trägerwellen;
- Fig. 17:: eine Blockdarstellung einer Empfangseinrichtung mit separaten Verarbeitungskanälen;
- Fig. 18:: eine Blockdarstellung einer Empfangseinrichtung zur kombinierten Auswertung von Mehrwegekomponenten;
- Fig. 19:: eine Blockdarstellung einer Empfangseinrichtung zur kombinierten Auswertung von Mehrwegekomponenten mit individueller Phasenkorrektur;
- Fig. 20:: eine Blockdarstellung einer Empfangseinrichtung mit Entzerrer;
- Fig. 21:: eine Blockdarstellung einer Empfangseinrichtung zur kombinierten Auswertung von Mehrwegekomponenten mit individueller Entzerrung;
- Fig. 22:: eine Blockdarstellung einer Empfangseinrichtung zur blinden Signalverarbeitung;
- Fig. 23:: eine Illustration zur Projektion eines Empfangssignals mit einem Echo auf zwei unterschiedlichen Hilfsfrequenzen zur Erzeugung von zwei gespiegelten Frequenzspektren;
- Fig. 24:: eine Detaildarstellung zur Projektion auf die obere Hilfsfrequenz;
- Fig. 25:: eine Detaildarstellung zur Projektion auf die untere Hilfsfrequenz;
- Fign. 26a, 26b:: Illustrationen zur spiegelverkehrten Anordnung der Frequenzanteile in den transformierten Spektren sowie zur Korrektur des Zeitversatzen mittels spezieller Filterfunktionen;
- Fign. 27a, 27b:: Illustrationen zur Lage der Frequenzanteile nach Verschiebung entlang der Zeitachse;
- Fig. 28:: eine Illustration zur Bildung einer zusammenhängenden Welle und zur Konzentration der Signalenergie in dem Frequenzfenster der entsprechenden Zentralfrequenz (vor dem Wegfiltern der Streuanteile).
- Fign. 29a, 29b:: Blockdarstellungen einer Sendeeinrichtung (a) bzw. einer Empfangseinrichtung (b) für PN-modulierte F2-Signale;
- Fig. 30:: eine Blockdarstellung einer Empfangseinrichtung mit Doppler-Abgleich; und
- Fig. 31:: eine Blockdarstellung einer Empfangseinrichtung mit integrierter Spektralanalyse-Einheit, insbesondere zur "on-line" Analyse der Multipath-Struktur;

Die erfindungsgemäße Signalübertragung wird im folgenden in Bezug auf die Signalerzeugung (senderseitige Generierung der Trägerfrequenz und deren Modulation) und die empfängerseitige Signalbearbeitung und Demodulation beschrieben. Die an sich bekannten physikalisch-technischen Maßnahmen zur Signalerzeugung oder -gewinnung, zur digitalen Informationscodierung, zum Senden und zum Empfangen werden im einzelnen nicht dargestellt.

### Senderseitige Modulation

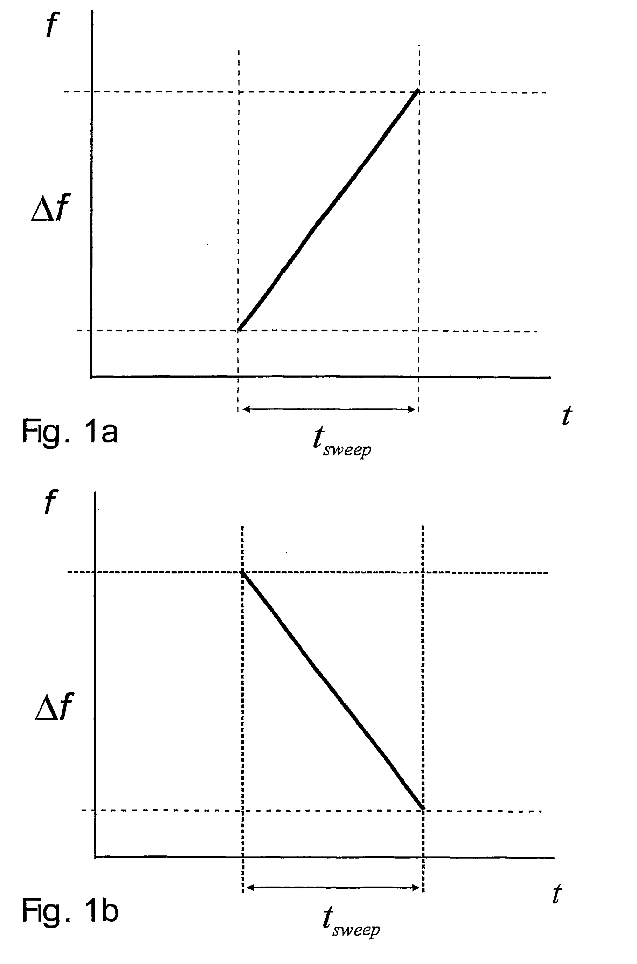

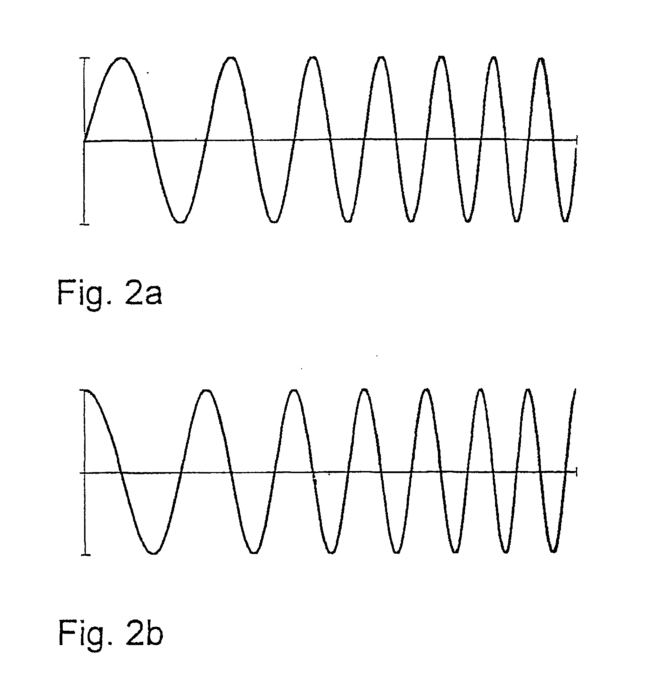

Die Figuren 1a und 1b zeigen als Beispiel jeweils einen einzelnen Trägersweep mit unterschiedlichem Frequenzanstieg, der in dieser einfachsten Variante linear ausgebildet ist. Die Figuren 2a und 2b zeigen in Anlehnung an Fig. 1a schematisch den Schwingungsverlauf für einige Schwingungsperioden, wobei der Frequenzanstieg jeweils gleich ist, sich die Anfangsphase jedoch um 180 Grad unterscheidet. Die Einstellung der Anfangsphase stellt ein Beispiel für eine (Phasen-) Codierung bei F2-Signalen dar. Andere Codierungsmöglichkeiten basieren auf den an sich bekannten Amplituden- und Frequenzmodulationen oder Kombinationen aus allen Modulationsarten.

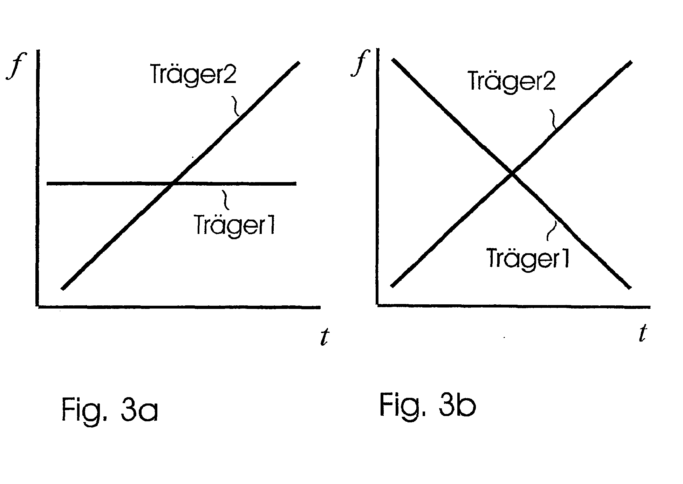

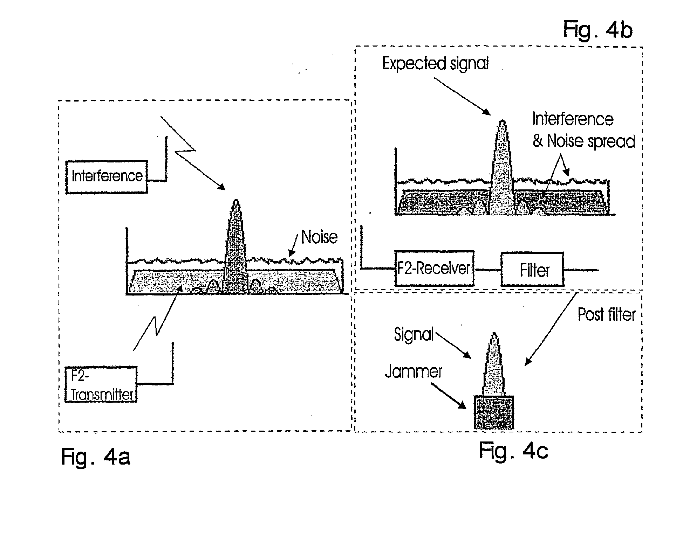

Die Figuren 3a und 3b veranschaulichen die Möglichkeit der zeitgleichen Übertragung eines Trägersweeps mit einem anderweitig konfigurierten Abschnitt einer Trägerwelle, wobei in Fig. 4 anhand der schematisch dargestellten spektralen Energiedichteverteilung veranschaulicht wird, dass sich zum Beispiel ein F2-Sweep-Signals und einer schmalbandigen Frequenzkomponente (hier in Bezug auf das Sweep-Signals als Interferenzsignal ausgewiesen) nur unwesentlich gegenseitig beeinflussen. Während in dem Übertragungs- bzw. Empfangssignal die schmalbandige Komponente deutlich hervortritt, die Energie des F2-Signals aber breit über das Frequenzband verteilt ist (Fig. 4a), kehren sich nach der Frequenztransformation mittels der empfängerseitig generierten Sweep-Hilfsfrequenz die Verhältnisse um (Fig. 4b). Im Ergebnis ist die Energie des zuvor schmalbandigen Störsignals über das Band gespreizt, währen die Energie des F2-Signals in einer Frequenzzelle konzentriert wird, womit dieses Signal nunmehr deutlich über dem Rauschen hervortritt. Dieses lässt sich nunmehr leicht herausfiltern und bewerten (analysieren). Fig. 4c veranschaulicht, in dem gefilterten Signal jedoch noch immer Rauschanteile enthalten sind, die bei der Auswertung der übertragenen Information Fehler verursachen können.

Ergänzend sei vermerkt, dass bei der Überlagerung eines Sweeps mit einem gegenläufigen Sweep (hier nicht dargestellt) im Zuge der Überführung des ersten in eine konstante Frequenz, die Signalenergie des zweiten Sweeps über einen noch größeren Frequenzbereich gespreizt wird.

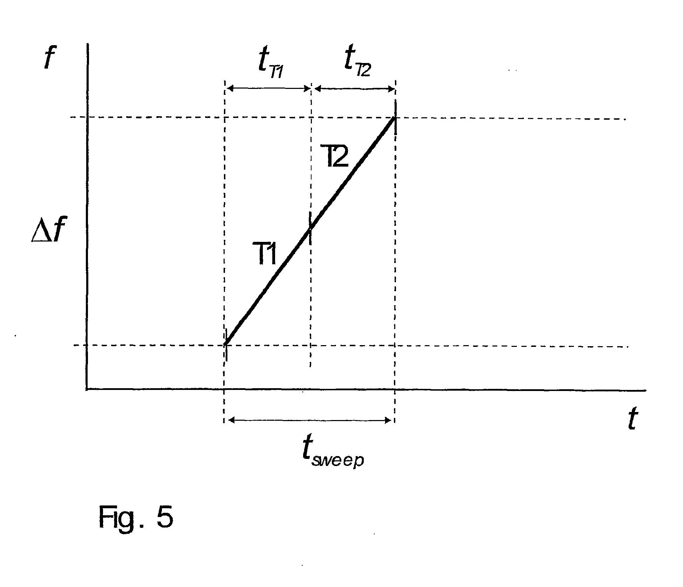

Ein Trägersweep kann Träger von einem oder mehreren Bits oder (bei analoger Informationsverarbeitung) von einer oder mehreren Informationseinheiten sein. Für mehrere Bits oder Informationseinheiten wird ein Trägersweep in Modulationszeittakte (MZT) unterteilt, wie dies beispielhaft in Figur 5 illustriert ist. Es ist die Unterteilung eines Sweeps mit linearem Frequenzanstieg in zwei gleich lange Takte T1 und T2 jeweils der Taktzeit t_{T1} bzw. t_{T2} dargestellt. Durch die Unterteilung der Trägersweeps in jeweils zwei oder mehr MZT kann eine höhere Bitrate erreicht werden.

Die Unterteilung in Modulationszeittakte dient insbesondere bei der Übertragung digitaler Informationen der Trennung der Bits bzw. der Wiederfindung. Werden z.B. zwei Nullen aufeinanderfolgend übertragen, so können sie als zwei Bits durch die Modulationszeittakte auseinandergehalten werden. Bei großen Taktzahlen (z.B. 10 Takte pro Sweep) ergeben sich vorteilhafterweise besonders hohe Bitraten.

Die Einführung der Modulationszeittakte weist auf einen wichtigen Unterschied gegenüber der oben genannten herkömmlichen Nutzung von Chirps bei der Signalübertragung. Erfindungsgemäß werden die Sweeps nicht einfach nur ein- und ausgeschaltet, sondern getaktet moduliert.

Die MZT-Taktzeiten können anwendungsabhängig in Bezug zur Frequenz der Trägerwelle kontinuierlich oder stufenweise verändert werden. Dabei wird davon ausgegangen, dass für die Demodulation der F2-Signale jeweils nur eine bestimmte Anzahl von Schwingungsperioden der Trägerwelle benötigt wird. Da sich in den Sweeps die Anzahl der Schwingungsperioden pro Zeiteinheit aber ständig ändert, kann ggf. eine erhebliche Steigerung der Bitrate erreicht werden, indem die Modulations-Taktzeiten auf das jeweils erforderliche Mindestmaß reduziert, d.h. der jeweils aktuellen Frequenzhöhe der Trägersweeps angepasst werden.

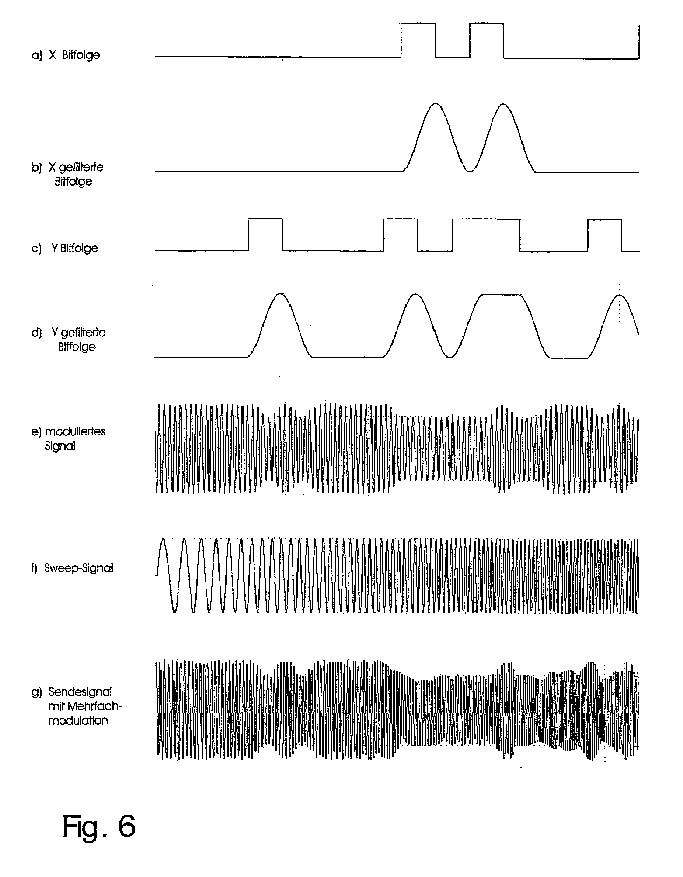

Eine weitere Möglichkeit zur Steigerung der Bitrate besteht zudem auch in der Anwendung komplexerer Modulationsverfahren zur Informationscodierung. Fig. 6 illustriert den Aufbau einer Mehrfachmodulation beim Erzeugen eines F2-Sendesignals am Beispiel einer an sich bekannten Offset-QPSK des Informationssignals und der anschließenden Modulation mit einem Trägersweep, wobei nur das Sendesignal dargestellt ist. Das nicht benötigte Seitenband wird weggefiltert. In dieser Darstellung hat das Informationssignal selbst eine Trägerwelle, welche dann mit dem Sweep bzw. auf den Sweep moduliert wird. Gleich, wie man es betrachten möchte, das Ergebnis ist in beiden Fällen identisch. Im vorliegenden Verfahren ist jedoch bevorzugt, wie eingangs erläutert wurde, den Sweep als Träger des Gesamtsignals zu betrachten. In diesem Zusammenhang sei nochmals darauf hingewiesen, dass die Bildung von F2-Signalen nicht unbedingt voraussetzt, dass das Informationssignal einen eigenständigen Träger besitzt. Es ist durchaus möglich, das Sweep-Signal direkt zu modulieren. Demzufolge können die in Fig. 6 mit e) bzw. c) bis e) gekennzeichneten Zwischenstufen ggf. auch übersprungen werden.

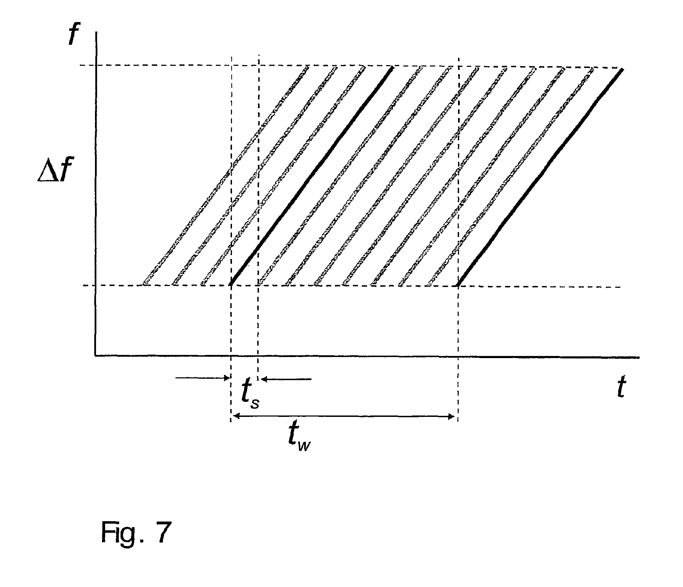

Fig. 7 zeigt ein Beispiel für die Mehrfachbelegung eines Frequenzbandes mit F2-Signalen gleich konfigurierter Trägersweeps. Die beiden dick gedruckten Linien stellen die zu einem Signal gehörigen Sweeps mit dem Zeitfenster t_{w} dar. Die Sweeps, die zu verschiedenen Signalen gehören, unterscheiden sich um vorbestimmte Zeitversatz-Werte tₛ (Time Slot).

Erfindungsgemäß können die Sweeps der F2-Signale nach einem bestimmten Protokoll konfiguriert werden, das sowohl für dem Sender als für den Empfänger festgelegt ist. Allgemein ist im Protokoll festgelegt, wie der Sweep aussieht (Zeitfunktion der Frequenzänderung) und wie er ggf. auf Frequenzbändern verteilt ist. Das Protokoll kann beispielsweise für jedes Paar unterschiedlich sein, womit insbesondere im Multi-User-Betrieb auf einem gemeinsamen Frequenzband die Gefahr der gegenseitigen Beeinflussung der Signale reduziert wird. Falls hingegen für mehrere F2-Signale im Parallelbetrieb eine gleichartige Sweepkonfiguration verwendet wird, kann das Übertragungsprotokoll beispielsweise dazu dienen, durch Einrichtung bzw. Zuweisung der Zeitfenster oder Zeitversatz-Werte (Time Slots) eine geeignete zeitliche Staffelung herbeizuführen (siehe Beispiel in Fig. 7).

Es kann vorgesehen sein, dass das Protokoll während des Betriebs nach einem vorher festgelegten Plan oder entsprechend einer übertragenen Signalcodierung (Übertragung eines Befehls "Änderung von Protokoll 1 auf Protokoll 10" od. dgl.) veränderlich ist.

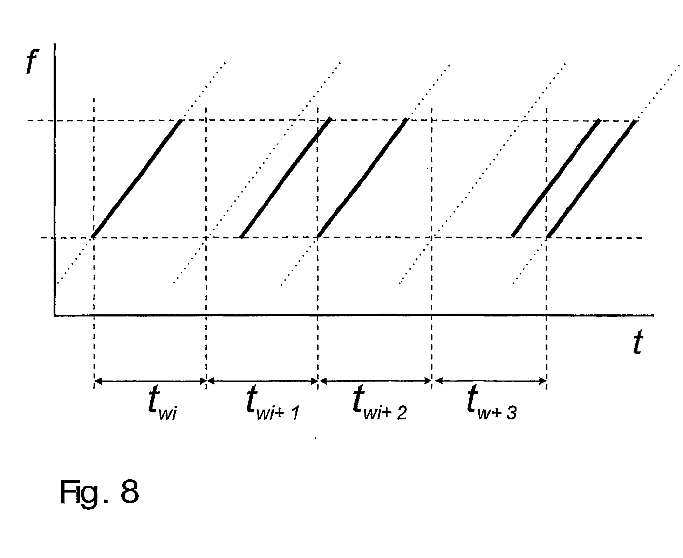

Eine weitere Möglichkeit, eine zufällige Komplettübertragung mehrerer F2-Signale auszuschließen, besteht darin, ungleiche Abstände zwischen den Sweeps einzurichten. Fig. 8 zeigt ein Beispiel für eine pseudo-zufällige Anordnung der Sweeps eines F2-Signals in einem Frequenzband (zufällige zeitliche Mischung). Die gepunkteten Linien deuten an, wo die betreffenden Sweeps im Fall gleichmäßiger Abstände zu erwarten gewesen wären. Die Einführung pseudozufälliger Abstände besitzt den Vorteil, daß auch ohne Zuweisung spezieller Zeitfenster (Time Slots), d. h. bei zufälliger zeitlicher Mischung von Signalen im Multi-User-Betrieb die vollständige Überlagerung von zwei oder mehr unterschiedlichen Signalen praktisch ausgeschlossen ist. Die Überlagerung einzelner Sweeps läßt sich mittels geeigneter Korrekturalgorithmen kompensieren.

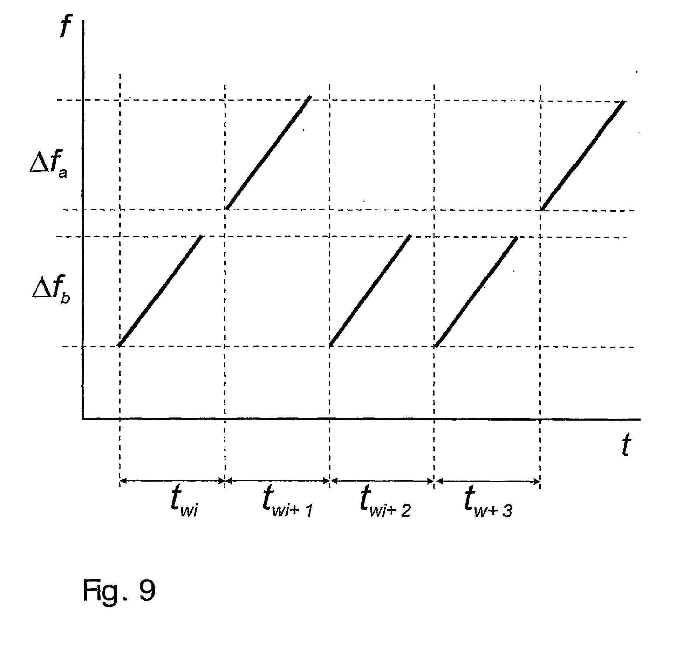

Fig. 9 veranschaulicht ein Beispiel für ein Übertragungsprotokoll, bei dem die Trägersweeps eines Informationssignals auf zwei unterschiedliche, vorzugsweise benachbarte Frequenzbänder Δfₐ und Δf_{b} verteilt werden. Es erfolgt ein abwechselndes Umschalten auf 2 verschiedene Kanäle oder Bänder, ohne dass der charakteristische Frequenzanstieg verändert wird.

### Empfängerseitige Demodulation

Die empfängerseitige Demodulation erfindungsgemäßer Sweep-Trägerwellen erfolgt nach den gleichen Prinzipien erfolgen, wie sie in PCT/DE99/02628 (WO0011817) beschrieben sind. Im folgenden wird lediglich auf Prinzipien der Überführung des Informationssignals in ein konstant feststehendes Frequenzband, beispielsweise durch Mischen bzw. Multiplikation mit einer künstlich erzeugten Hilfsfrequenz (Sweep-Heterodynefrequenz) eingegangen. Zusätzliche an sich bekannte Maßnahmen zur Verbesserung des S/N-Verhältnisses und Bandpaßfilterungen können vorgesehen sein.

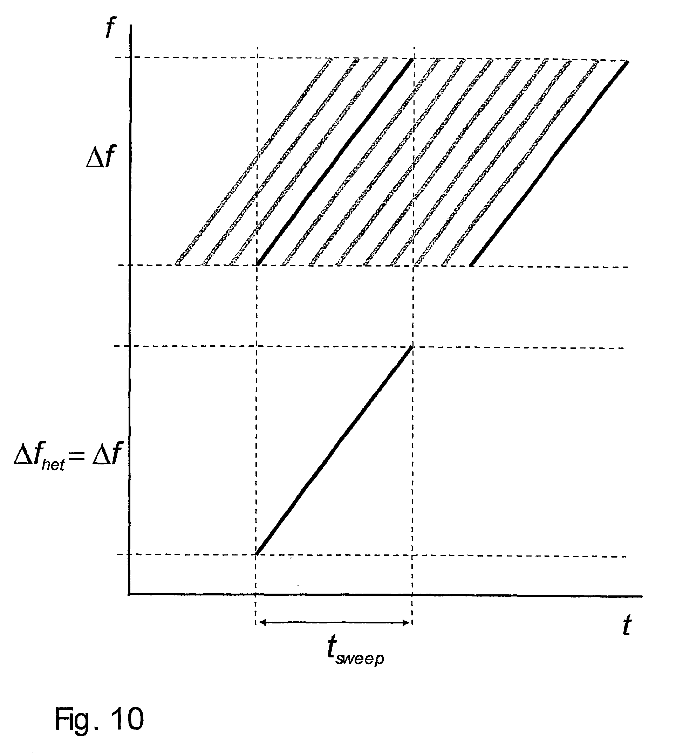

Fig. 10 zeigt im oberen Teil schematisch das Empfangsergebnis auf einem Frequenzband, welches im Parallelbetrieb gleichzeitig von mehreren Nutzern verwendet wird. Dabei ist das für den gegebenen Empfänger bestimmte F2-Signal durch eine dick gedruckte Linie hervorgehoben und das Zeitfenster, in dem sich der gerade zu analysierende Sweep befindet, durch gestrichelte vertikale Linien gekennzeichnet. Die schwächer gedruckten Linien beziehen sich auf fremde F2-Signale. Seitens des Empfängers wird systemintern eine künstliche Welle (Sweep-Hilfsfrequenz bzw. Heterodynefrequenz) generiert, die im vorliegenden Beispiel in dem betreffenden Zeitfenster t_{sweep} die gleiche relative Frequenzänderung Δfₕₑₜ aufweist, wie der zu bearbeitende Trägersweep des F2-Signals, sich von diesem aber hinsichtlich der Frequenzlage unterscheidet, beispielsweise - wie im unteren Teil der Fig. 10 dargestellt - niedriger liegt.

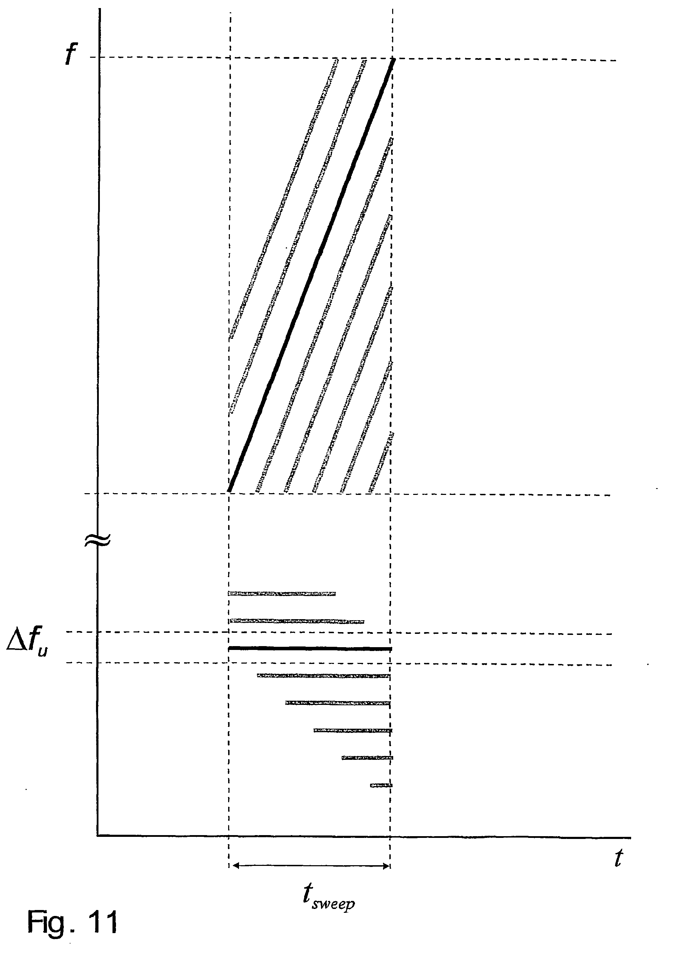

Anschließend erfolgt ein Mischen bzw. eine Multiplikation des jeweiligen empfangenen Sweeps mit der Heterodynefrequenz. Das Ergebnis ist in Fig. 11 illustriert, die im oberen Teil eine ähnliche Ausgangskonfiguration wie Fig. 10 zeigt. Durch die Projektion des zu analysierenden Sweeps auf eine Hilfsfrequenz mittels eines Mischers bzw. Multiplikators werden die Trägerfrequenzen aller in dem betreffenden Zeitfenster liegenden Sweeps dieses Musters in konstant feststehende Frequenzen überführt, die sich in ihrer Höhe unterschieden (unterer Teil von Fig. 11). Aus diesem Spektrum wird dann auf einfache Weise, beispielsweise mittels eines Bandpaßfilters, die gewünschte Signalkomponente, hier der frequenztransformierte Sweep, herausgefiltert. Dabei werden auch die bei der Transformation ggf. entstehenden (hier nicht dargestellten) Seitenbänder weggefiltert. Der solchermaßen transfomierte und "gereinigte" Sweep kann anschließend mittels der in der Signalverarbeitung gebräuchlichen Methoden wie ein "normales" Signal mit konstanter Trägerfrequenz weiter verarbeitet und hinsichtlich der informationstragenden Parameter etwa der Phasenwinkel, der Amplitude oder, im Fall einer Frequenzmodulation auch hinsichtlich des dann auch nach der Transformation noch verbliebenen Frequenzverlaufes bzw. der Dynamik der Phasenänderung analysiert werden. Dies stellt einen wesentlichen Vorteil der F2-Technologie dahingehend dar, dass sie lediglich den Zwischenschritt der Frequenztransformation benötigt, um dann im weiteren voll zu allen bekannten und bewährten Methoden der Signalverarbeitung kompatibel zu sein.

Darüber hinaus beinhaltet das F2-Verfahren noch die Möglichkeit, beispielsweise anhand der Abweichung der transformierten Trägerfrequenz von dem zu erwartenden Sollwert eine ggf. auftretende Dopplerverschiebung zu erkennen, zu analysieren, beispielsweise um daraus die Geschwindigkeit der Abstandsänderung zwischen Sender und Empfänger zu ermitteln, bzw. die solchermaßen oder auf anderem Wege bestimmte Dopplerverschiebung bei der Erzeugung der Sweep-Hilfsfrequenz zu berücksichtigen und so die Qualität bzw. Stabilität der Datenübertragung zu verbessern. Diese Gestaltung ist insbesondere für die Kommunikation zwischen oder mit rasch bewegten Objekten von Vorteil. Auch hier sei nochmals auf die Möglichkeit hingewiesen aus den Empfangssignalen zur Ableitung von weiteren Umgebungsdaten wurde bereits mehrfach erwähnt.

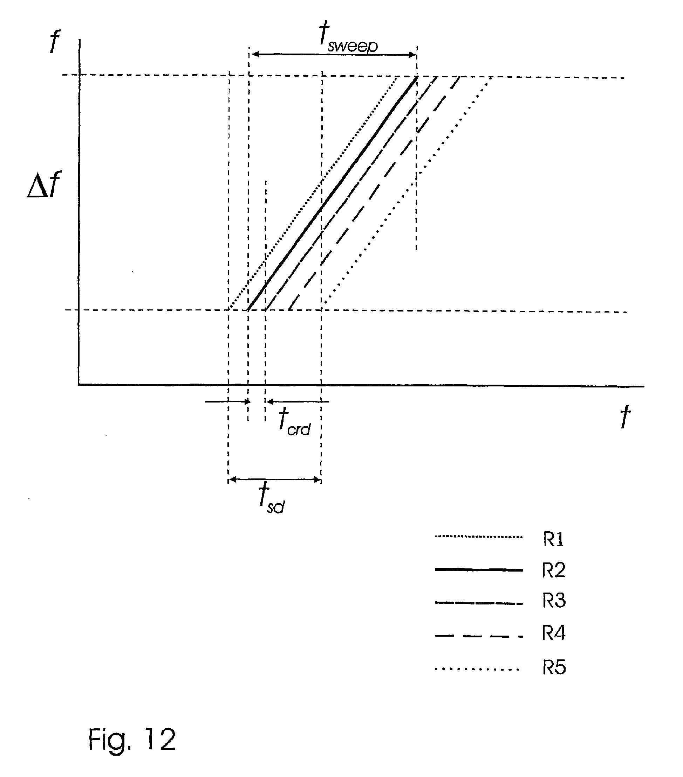

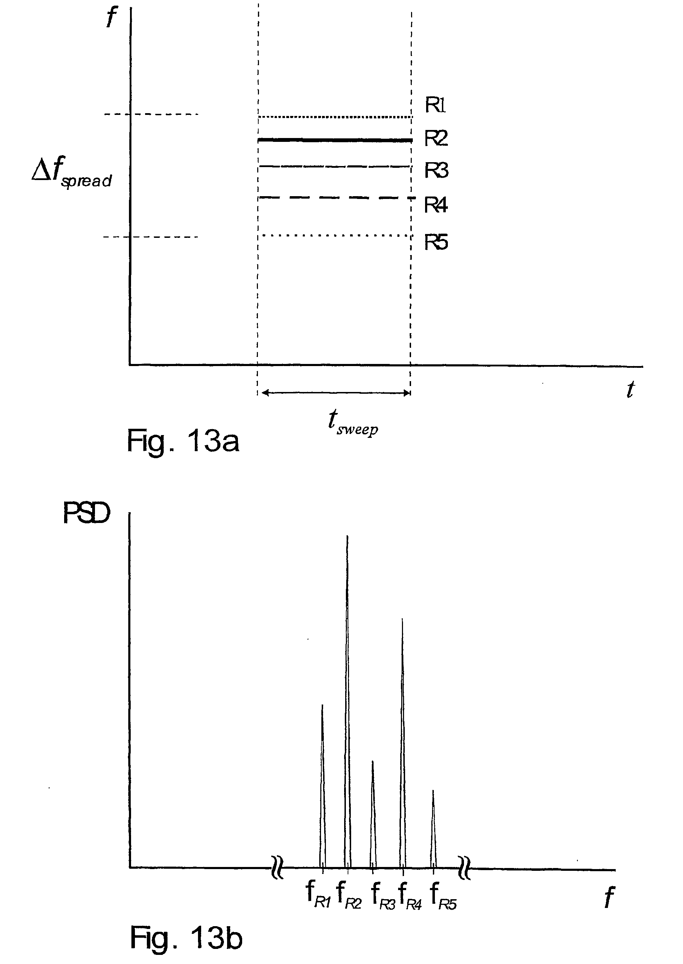

Ein weiterer wesentlicher Vorteil der Erfindung besteht darin, dass es im Ergebnis der beschriebenen Frequenztransformation mit der Hilfsfrequenz im Fall der Multipath Propagation möglich ist, beispielsweise durch Verwendung entsprechend scharfer Filter oder einer geeigneten FFT-Analyse, aus den verschiedenen Kanalantworten eine einzelne bzw. die am besten geeignete, beispielsweise die jeweils stärkste Kanalantwort, zu separieren und zu analysieren. In den Figuren 12 und 13 wird (in Analogie zu Fig. 10 und 11) eine detailliertere Darstellung gegeben, anhand derer eben diese Leistungsfähigkeit, die eine völlig neue Qualität der Informationsübertragung speziell auch in inhomogenen Medien und strukturierten Räumen begründet, im folgenden weiter erläutert wird.

Allgemein ist vorgesehen, dass aus dem Spektrum der in dem transformierten Signal - beispielsweise infolge von Mehr-Wege-Ausbreitungen (Multipath Propagation) - enthaltenen Einzelfrequenzen (Kanalantworten) die jeweils am besten geeignete, beispielsweise die am stärksten empfangene Komponente, vorzugsweise mittels Filtereinrichtungen bzw. auf der Basis von einfachen oder komplexen FFT-Analysen isoliert und ausgewertet wird.

Die kontinuierliche Frequenzverschiebung bewirkt im Fall bei Multipath Propagation, dass die einzelnen Kanalantworten aufgrund ihres Zeitversatzes als parallele Sweeps beim Empfänger eintreffen. Die Stärke der Parallelverschiebung wird neben den Laufzeitunterschieden auch von der Steilheit der Sweeps bestimmt. Die Frequenzgradienten bewirken, dass der Zeitversatz, d.h. die Laufzeitunterschiede zwischen den Kanalantworten, nicht mehr interferieren, sondern anhand ihrer unterschiedlichen Frequenzen signaltechnisch voneinander getrennt, bzw. die Einflüsse der Seitenfrequenzen abgeschwächt werden können. Je steiler die Sweeps sind, d.h. je größer der Betrag der Frequenzänderung in dem gegebenen Signalabschnitt gewählt wurde, desto breiter die spektrale Aufschlüsselung der Kanalantworten.

Dieser Zusammenhang ermöglicht es, das Verfahren optimal an unterschiedliche Übertragungsbedingungen anzupassen, indem beispielsweise bei der Funkübertragung im Inneren von Gebäuden, im Stadtgebiet oder auf dem Lande ggf. auch situationsbedingt unterschiedliche Frequenzgradienten, d.h. verschieden steile Trägersweeps verwendet werden.

Fig. 12 zeigt eine Reihe von Kanalantworten (symbolisiert durch R1 bis R5), die mit unterschiedlichem Zeitversatz (allgemein mit t_{crd} für Channel Response Delay bezeichnet) als parallele Sweeps beim Empfänger ankommen. Demzufolge erweitert sich das Zeitfenster für den Empfang der verschiedenen Abbilder ein und desselben Sweeps um den Betrag t_{sd} (Time Spread Delay). Fig. 13a zeigt schematisch, dass sich im Ergebnis der Frequenztransformation die jeweiligen Laufzeitunterschiede als unterschiedliche Frequenzlagen darstellen. Hier tritt nun der bereits anhand von Fig. 4 erläuterte Effekt ein, dass durch die Transformation die ursprünglich auf den von den Sweeps überstrichenen Frequenzbereich ΔF verteilte Energie auf jeweils eine Frequenzzelle zusammengeschoben wird (Fig. 13b), wodurch eine erhebliche Verbesserung des S/N (Signal-Rausch-Verhältnisses) erreicht und gleichzeitig auch der zufällige Einfluss einzelner Frequenzanteile des Rauschens abgemildert wird.

Trotz dieser insgesamt wirksamen Verbesserung können aber, wie in Fig. 13b beispielhaft veranschaulicht ist, die transformierten Kanalantworten je nach ihrer Vorgeschichte im Übertragungsprozess unterschiedlich stark ausgebildet sein. Es bietet sich an, als ein verfahrenstechnisch leicht zu realisierendes Auswahlkriterium die Frequenz mit der jeweils größten Amplitude zu bestimmen und die entsprechende Komponente beispielsweise mittels eines steuerbaren, entsprechend scharfen Filters herauszufiltern. Die entsprechende Einstellung des Filters kann beispielsweise analog zu der in PCT/DE99/02628 (WO0011817) als Kanal-Tuning bezeichneten Methode vorgenommen werden. Gleichermaßen ist es möglich, durch Veränderung der Frequenzlage (Anfangsfrequenz) der Hilfsfrequenz die gewünschte Komponente in einem vorgegebenen Filterfenster zu platzieren. Durch eine dieser Maßnahmen kann gewährleistet werden, dass jeweils das bestmögliche S/N genutzt wird. Andererseits kann es sich z.B. bei Verwendung einer Phasencodierung auch als nützlich erweisen, aus dem Spektrum der fest stehenden Zwischenfrequenzen eine bevorzugte, möglichst einzeln stehende Komponente herauszulösen, da deren Phasenlage noch weniger durch Nachbarkomponenten beeinflusst werden kann.

In diesem Zusammenhang ist besonders hervorzuheben, dass mittels entsprechend steiler Sweeps insbesondere auch die Kanalantworten voneinander getrennt werden können, deren Laufzeitunterschied zu einem Phasenversatz um π führt, womit die Auslöschung infolge Interferenz mit hoher Sicherheit ausgeschlossen werden kann.

Die Ermittlung eines Spektrums der in dem transformierten Signal enthaltenen Einzelfrequenzen gemäß Figur 13b ermöglicht eine weitere Verbesserung des S/N-Verhältnisses. Alle Einzelfrequenzen tragen dieselbe Nutzinformation mit verschiedenen Rauscheinflüssen entsprechend den verschiedenen geometrischen Übertragungskanälen. Damit entsteht eine auswertbare Redundanz. Jeweils zwei oder mehrere Komponenten (Kanalantworten) werden isoliert und separat voneinander analysiert Dann werden die Auswertungsergebnisse verglichen bzw. verrechnet, beispielsweise durch Bildung der Mittelwerte aus den jeweiligen Signalparametern ggf. mit Wichtung entsprechend der Stärke der betreffenden Komponenten. Dies bedeutet, dass bei der durch Multipath Propagation verursachten natürlichen Redundanz, d.h. das Erscheinen von mehreren Abbildern (Kanalantworten) ein und desselben Informationssignals (eins der bisherigen Hauptprobleme der Daten-überträgung) nun erstmals zur Verbesserung der Auswertungqualität gemacht werden kann. Trotz der oben bereits beschriebenen Verbesserung des S/N und teilweiser Nivellierung der Rauscheinflüsse über einen gewissen Frequenzbereich können insbesondere bei sehr kurzen Taktzeiten durch das Rauschen immer noch zufällige Phasenstreuungen verursacht werden. Üblicherweise versucht man in der Signaltechnik, diesen Einflüssen durch verlängerte Taktzeiten zu begegnen, womit eine zeitliche Mittelung bewirkt wird. Bei der F2-Technologie kann jedoch zusätzlich auch das von der Natur in Gestalt der diversen Mehrwegekomponenten (Echos) bereit gestellte Parallelangebot genutzt werden, indem die informationstragenden Signalparameter beispielsweise in einem parallel laufenden Auswertungsprozess gleichzeitig für mehrere Mehrwegekomponentenausgewertet und dann in einer geeigneten Weise miteinander verrechnet werden.

Verschiede Möglichkeiten, mittels spezieller Verarbeitungstechniken die Mehrwegekomponenten synchron zu ziehen und dann die Signalenergie dieser Anteile in einer Frequenz zusammenzuführen um ein entsprechend stärkeres Gesamtsignal zu erhalten und auszuwerten, wurden eingangs bereits beschrieben.

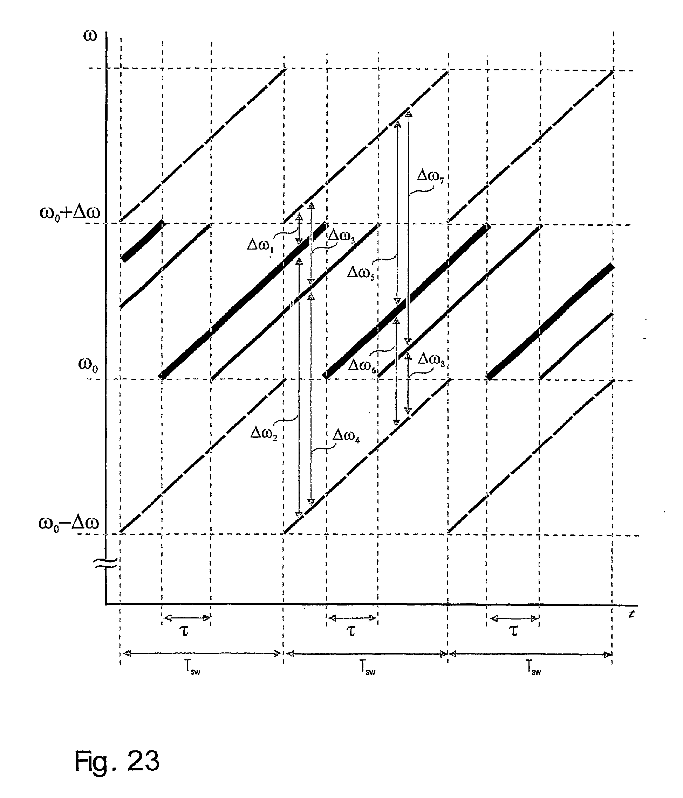

Die Figuren 23 bis 28 veranschaulichen die Vorgehensweise bei der blinden Signalverarbeitung. Dargestellt ist ein Beispiel für eine der erfindungsgemäßen Verarbeitungsweisen, bei der das Empfangssignal (schematisiert in Form von zwei Multipath-Komponenten mit dem Zeitversatz τ dargestellt) ein in zwei parallelen Bearbeitungsschritten zum einen mit einer künstlich erzeugten Heterodynefrequenz multipliziert wird, die in einem höheren Frequenzband liegt und zum anderen mit einer zweiten Heterodynefrequenz multipliziert wird, welche im Vergleich zur ersten Heterodynefrequenz die gleiche Frequenzcharakteristik aufweist, jedoch in einem tieferen Frequenzband liegt. Fig. 23 zeigt, dass die beiden Hilfsfrequenzen synchron zueinander erzeugt werden, die Erzeugung jedoch nicht mit dem Empfangssignal synchronisiert zu sein braucht. Die Länge der Sweeps T_{sw} ist jedoch in allen Fällen gleich. Die mit Δω und entsprechenden Indices bezeichneten Pfeile veranschaulichen die jeweiligen momentanen Anstandsverhältnisse, die sich aufgrund des zufälligen Zeitversatzes zwischen den Mehrwegeanteilen des Empfangssignals und den Hilfs-Sweeps ergeben.

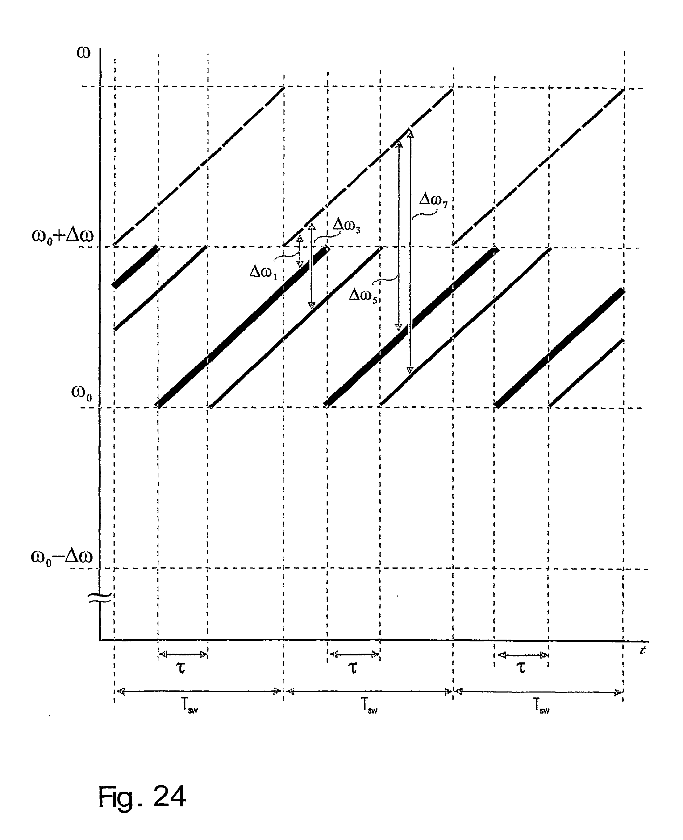

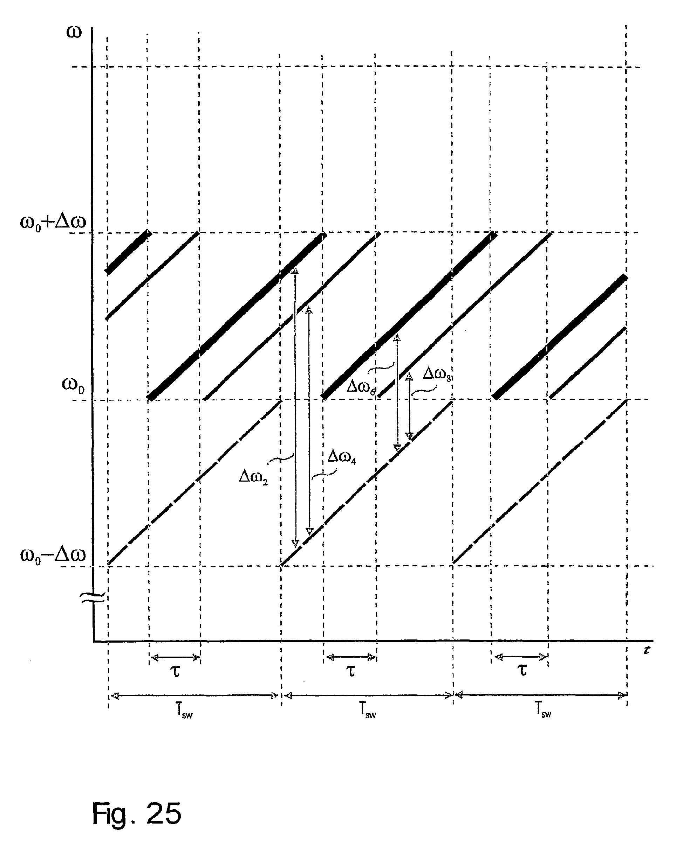

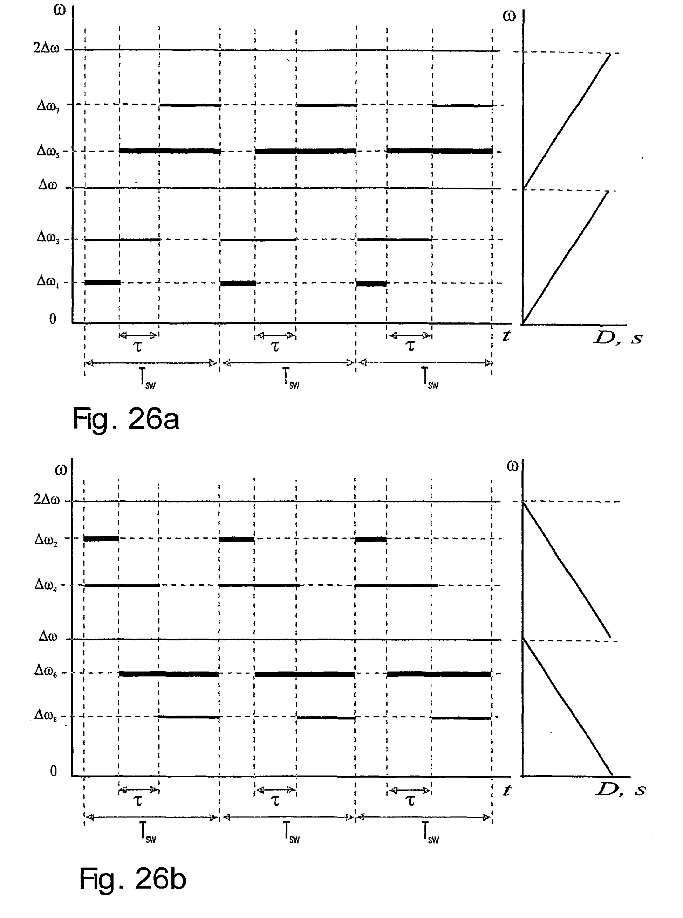

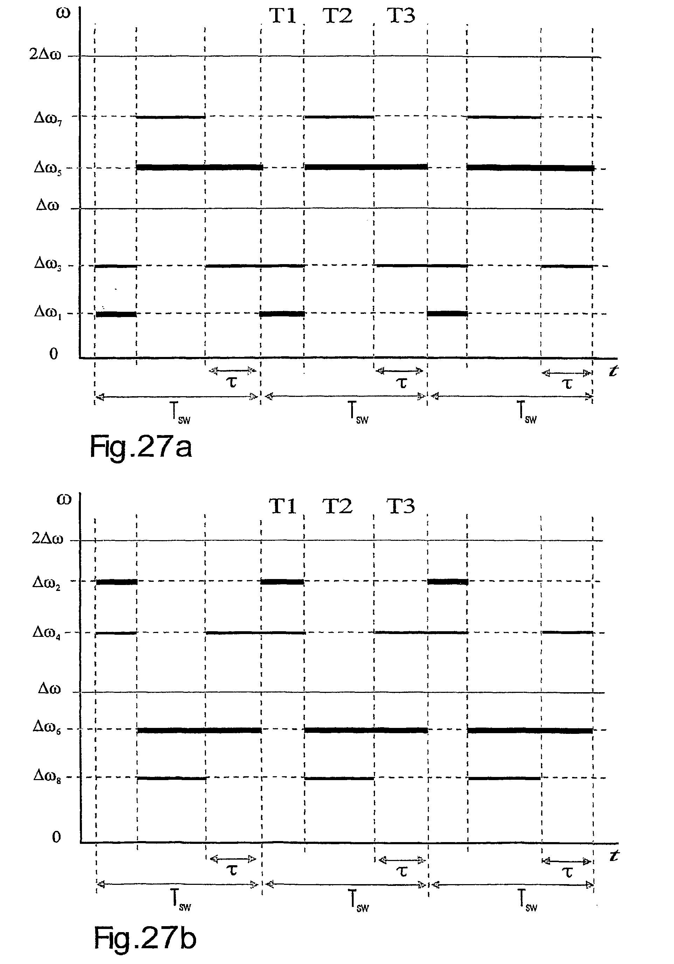

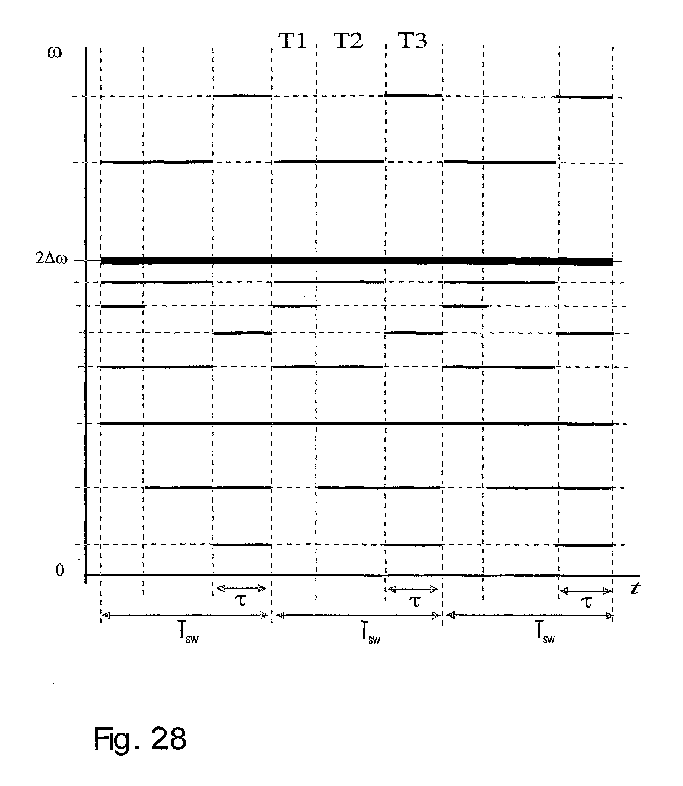

Die Figuren 24 und 25 zeigen die betreffenden Ausschnitte nochmals detailliert. Dabei gibt Fig. 24 eine Detaildarstellung zur Projektion auf die obere Hilfsfrequenz und Fig. 25 eine Detaildarstellung zur Projektion auf die untere Hilfsfrequenz. In diesem Zusammenhang kann ggf. auch eine Phasentransformation eines oder beider Spektren durchgeführt werden. Die Figuren 26a und 26b zeigen schematisch die beiden Spektren, die sich nach der Multiplikation mit den betreffenden Hilfsfrequenzen ergeben. In diesen Spektren sind die einzelnen Spektralanteile in Bezug zur Zentralfrequenz des jeweiligen Spektrums (hier in beiden Fällen mit Δω bezeichnet) spiegelverkehrt dargestellt sind. Falls die Mittenfrequenzen der Hilfs-Sweeps (Heterodynefrequenzen) nicht symmetrisch zum Empfangssignal angeordnet sind, können sich die Zentralfrequenzen der beiden Spektren auch unterscheiden. Wichtig sind nur die spiegelsymmetrischen Verhältnisse im Inneren dieser Spektren. Im rechten Teil der Abbildungen sind jeweils die Filterfunktionen schematisch dargestellt, mittels derer der Zeitversatz der Spektralkomponenten korrigiert wird. Diese Bearbeitungsstufe kann ggf. auch zur Entzerrung individueller Frequenz- bzw. Phasenverwerfungen, zur Feinsynchronisation der Elemente in beiden Spektren weiter ausgebaut werden. Die Figuren 27a und 27b zeigen in Analogie zu den Figuren 26a und 26b schematisch die Lage der Frequenzanteile nach Verschiebung entlang der Zeitachse. Wenn die in Fig. 27a und 27b dargestellten Spektren nun miteinander multipliziert werden, so sammeln sich die zuvor synchronisierten Elemente in Form einer zusammenhängenden Welle mit der Frequenz 2 Δω,wobei sich auch die Signalenergie in dem entsprechenden Frequenzfenster konzentriert. Figur 28 zeigt schematisch das Ergebnis einer solchen Operation. Die neue Zentralfrequenz (als fette Linie dargestellt), kann nunmehr herausgefiltert und ausgewertet werden.

### Sende- und Empfangseinrichtungen

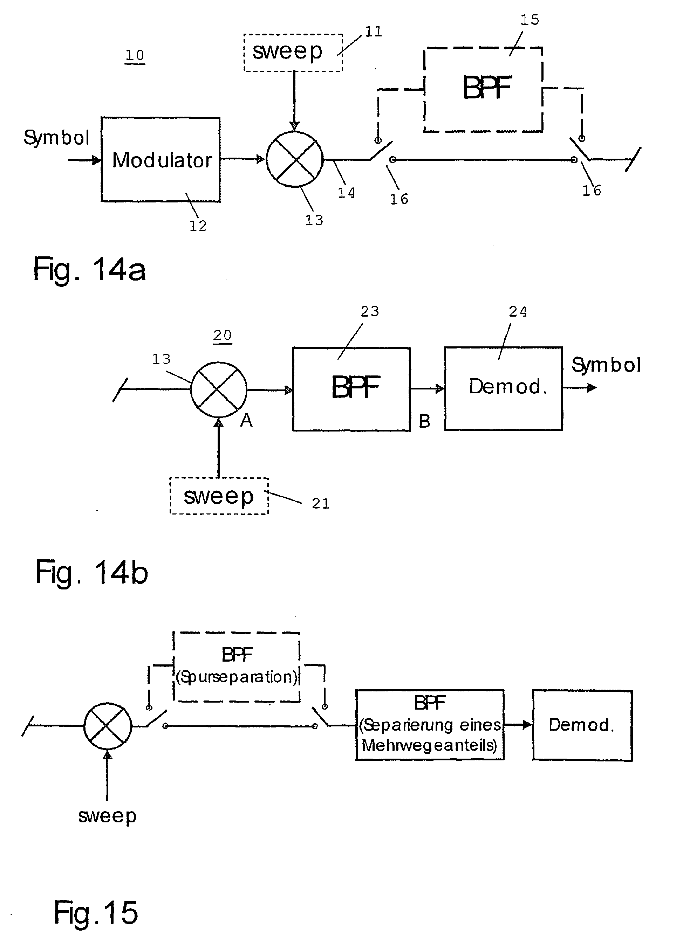

Fig. 14a zeigt eine erfindungsgemäße Sendeeinrichtung 10, die eine senderseitige Generatoreinrichtung 11 zum Erzeugen von Gradient-Trägerwellen (GTW), eine Modulatoreinrichtung 12 zu deren Modulation und eine Mischeinrichtung 13 aufweist. Die Generatoreinrichtung 11 ist zum Erzeugen von Gradient-Träger-Wellen, bzw. Trägersweeps nach den oben erläuterten Prinzipien ausgelegt und mit an sich bekannten, steuerbaren Signalformern aufgebaut. Die Modulatoreinrichtung 12 dient dem Codieren der Information, die übertragen werden soll. Dies erfolgt nach anwendungsabhängig gewählten, an sich bekannten Codierungsverfahren. Die Mischeinrichtung 13 ist ein Modul für die Zusammenführung von Träger- und Informationskomponenten (Mischer, Multiplikator o.ä.). Sie besitzt einen Ausgang 14, der ggf. mit einer Filtereinheit 15 oder direkt über einen Sender mit dem physikalischen Übertragungskanal verbunden ist. Die Filtereinheit 15 wird vorzugsweise durch eine Bandpaßfilter-Einheit (BPF) gebildet, die zwischen den Ausgang 14 und die Sendeantenne oder einen Sendewandler (nicht dargestellt) zwischengeschaltet sein kann. Die Filtereinheit 15 dient der Beseitigung ggf. auftretender Nebenfrequenzen. Sofern diese nicht stören, kann das Modul auch direkt mit dem Ausgang verbunden werden.

In diesem Sendesystem wird die eingegebene Information (Symbol) von der Modulatoreinrichtung 12 signaltechnisch umgeformt und dann in dem Modul 13 für die Zusammenführung der vom gleichermaßen mit diesem Modul verbundenen GTW-Generator 11 erzeugten Gradient-Trägerwelle aufgeprägt. Die beiden Schalter 16 und das durch eine gestrichelte Linie bezeichnete Bandpaßfilter (BPF) veranschaulichen, dass die Filtereinheit 15 fakultativ vorzugsweise mit dem Modul in Reihe geschaltet werden kann.

Fig. 14b zeigt eine Ausführungsform einer erfindungsgemäßen Empfangseinrichtung 20, die eine empfängerseitige Generatoreinrichtung 21 zum Erzeugen einer künstlichen Hilfsfrequenz, vorzugsweise einer Gradientwelle bzw. Sweep, eine Projektionseinrichtung 22 zu deren Überlagerung mit dem von einer Empfangsantenne oder einem Empfangswandler (nicht dargestellt) erhaltenen Empfangssignal, eine Trenneinrichtung 23 zur Trennung von Signalkomponenten und eine Demodulatoreinrichtung 24 aufweist. Die Schaltungen 21 - 24 bilden eine Einrichtung zum Erfassen von Signalen mit veränderlichen Trägerfrequenzen.

Die Generatoreinrichtung 21 ist ebenfalls mit an sich bekannten, steuerbaren Signalformern aufgebaut. Die Projektionseinrichtung 22 umfaßt einen Mischer, Multiplikator o.ä. Die Trenneinrichtung 23 enthält zumindest ein Modul zur Trennung von Signalkomponenten, beispielsweise eine Bandpaßfilter-Einheit (BPF), eine steuerbare Filtereinheit oder eine FFT-Einheit. Die Demodulatoreinrichtung 24 dient der Signalanalyse/Demodulation und gibt die übertragene Information als Symbol aus. Bei Verwendung einer komplexen FFT-Analyseeinheit können das Modul zur Trennung und die Demodulationseinrichtung auch in Form einer gemeinsam en Schaltungseinheit realisiert werden.

Figur 15 zeigt ausschnittsweise eine Abwandlung einer Empfangseinrichtung, welche die gezielte Bearbeitung einer Mehrwegekomponente ermöglicht.

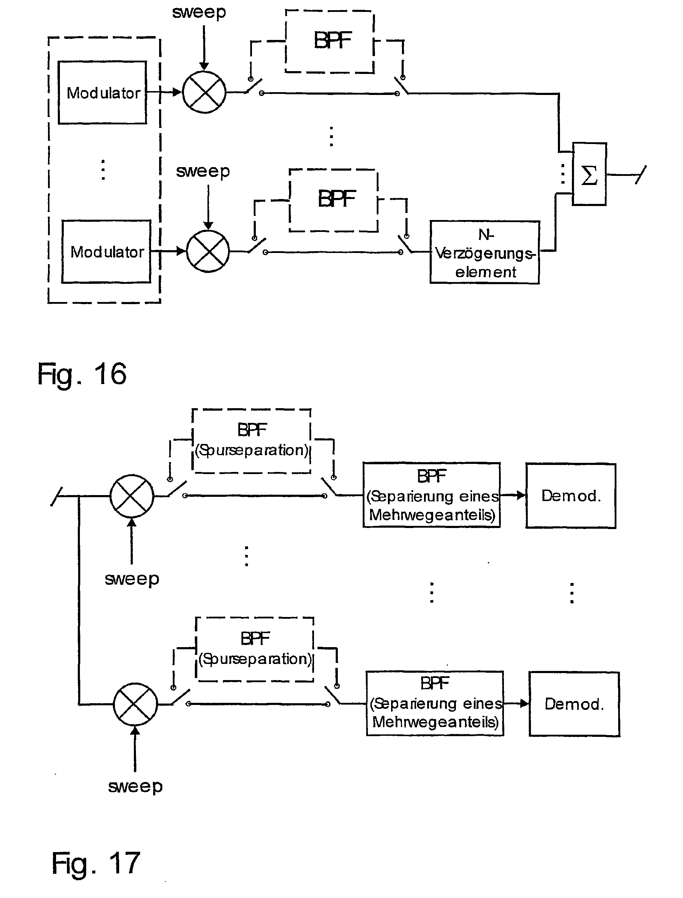

Die folgenden Abwandlungen der Sende- und/oder Empfangseinrichtungen besitzen Vorteile insbesondere auch beim Multi-User-Betrieb. Die Figuren 16 und 17 zeigen Beispiele in denen mehrere parallele Erzeugungs-, bzw. Verarbeitungskanäle vorgesehen sind, wobei die jeweiligen Modulator- bzw. Generatoreinrichtungen vorzugsweise parallel geschaltet sind und über ein zentrales Steuermodul (nicht dargestellt) miteinander gekoppelt sind, welches die Form, Höhe und zeitliche Abfolge der Sweeps und/oder deren Modulation (vorzugsweise entsprechend dem Sende- bzw. Übertragungsprotokoll) steuert. Entsprechend kann die Empfangseinrichtungen ebenfalls ein Steuermodul aufweisen, das dementsprechend die Signalverarbeitung steuert. Es sind ggf. mehrere Schaltungen gemäß den Figuren 14a, 14b bzw. Figur 15 parallel geschaltet, die über ein gemeinsames Steuermodul miteinander gekoppelt sind und durch weitere Schaltungselemente ergänzt werden können.

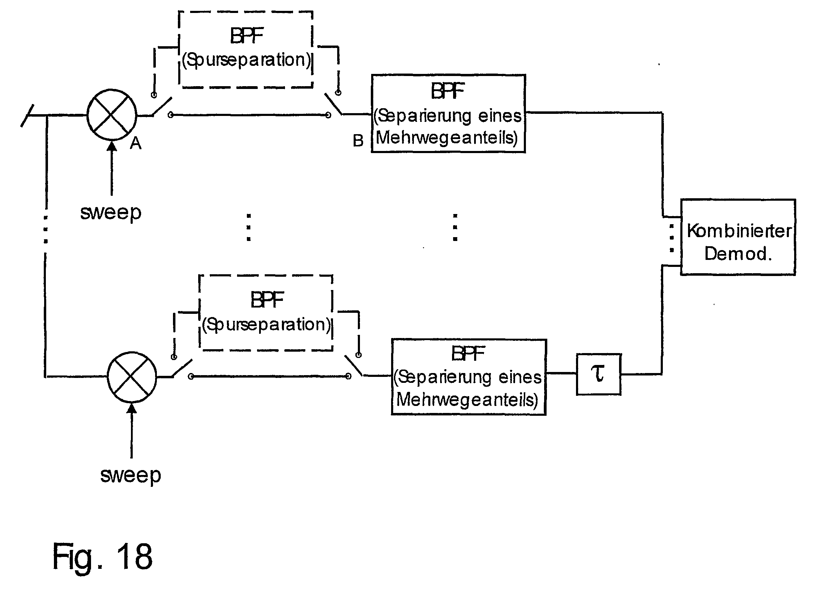

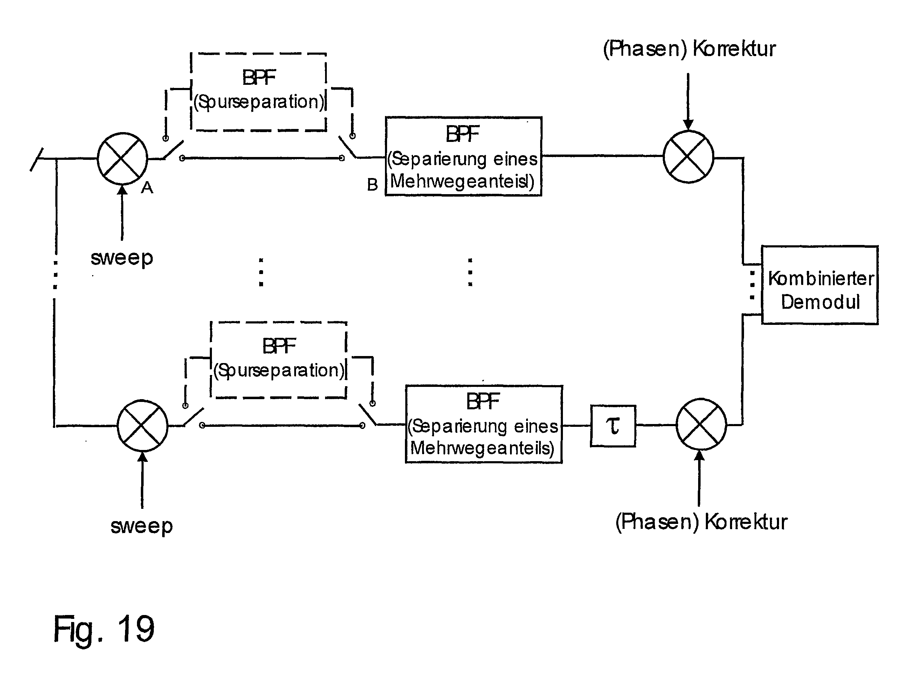

Figur 18 zeigt eine Blockdarstellung einer Empfangseinrichtung zur kombinierten Auswertung von Mehrwegekomponenten, wobei mit τ eine Baugruppe zur Korrektur von Verzeichnungen bzw. Verschiebungen, beispielsweise Zeitverschiebungen, bezeichnet ist. Figur 19 zeigt als eine Weiterentwicklung von Figur 18 eine Blockdarstellung einen Ausschnitt einer Empfangseinrichtung zur kombinierten Auswertung von Mehrwegekomponenten mit individueller Phasenkorrektur.

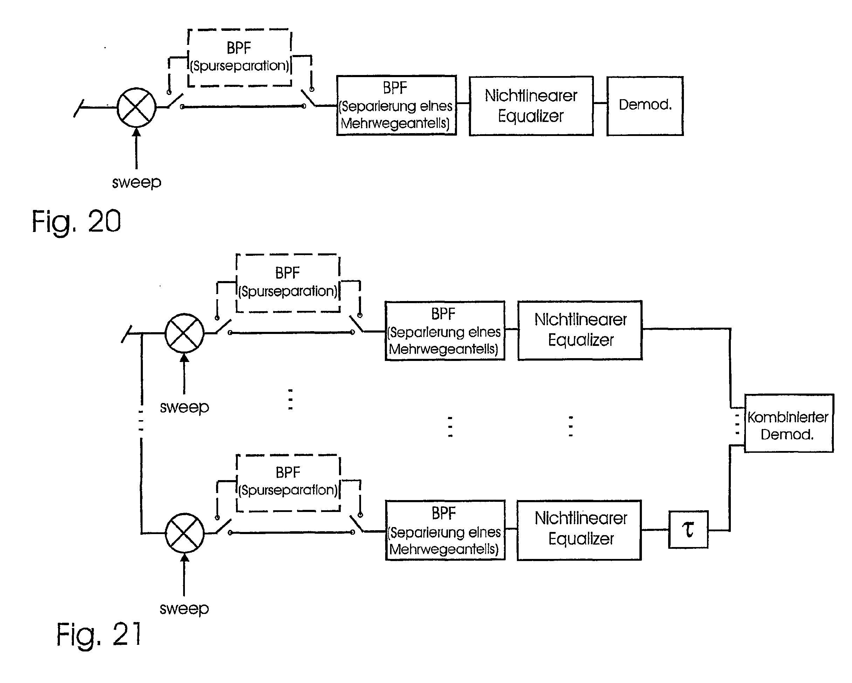

Fig. 20 zeigt in der Blockdarstellung als Detail einen Bearbeitungskanal einer Empfangseinrichtung mit einer zusätzlichen, nichtlinearen Filtereinheit zum Entzerren einer Mehrwegekomponente. Figur 21 zeigt in Anlehnung an Fig. 20 eine Ausführung zur kombinierten Auswertung von Mehrwegekomponenten mit Schaltungselementen zur individuellen Feinkorrektur.

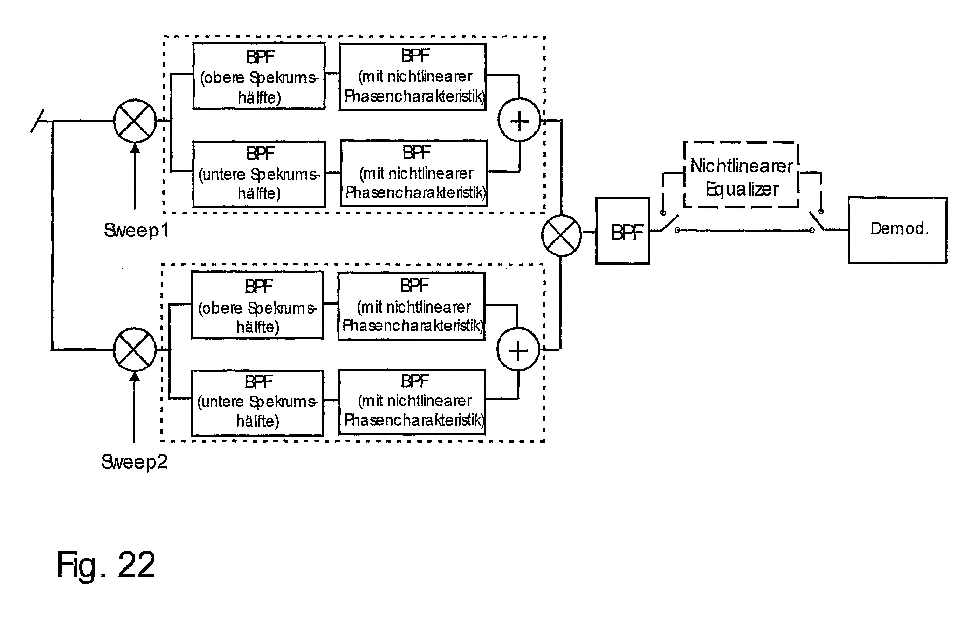

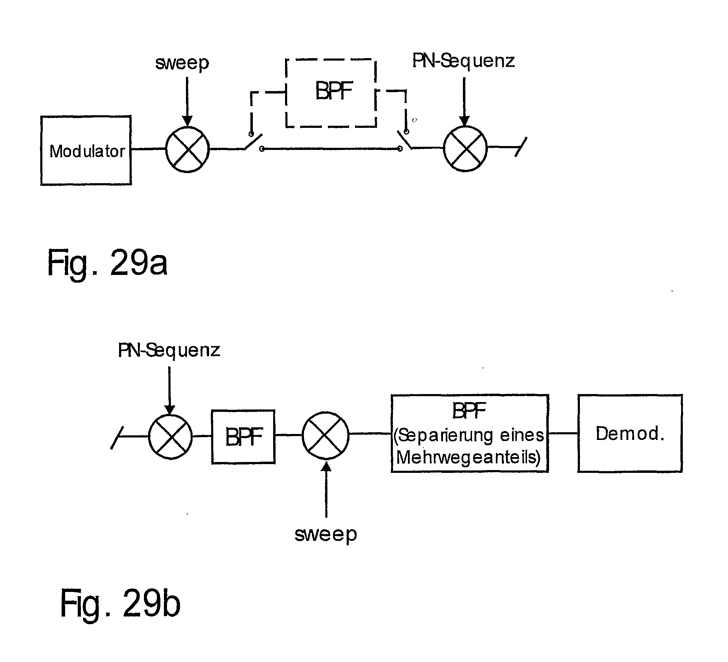

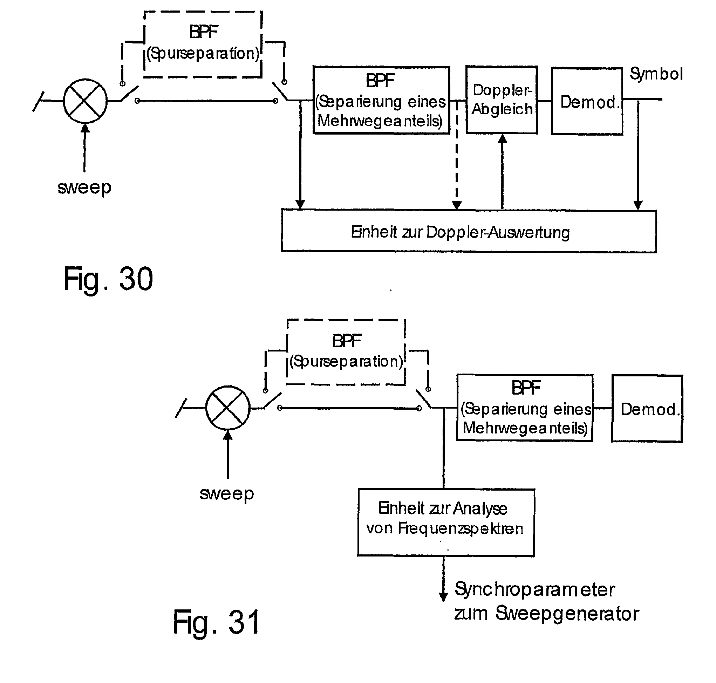

Figur 22 zeigt ein Beispiel den zentralen Teil einer Empfangseinrichtung zur oben beschriebenen "blinden" Signalverarbeitung. Die Figur 29 bis 31 zeigen weitere Ausführungsformen erfindungsgemäßer Empfangseinrichtungen, die zur Umsetzung der oben beschriebenen PN-Verfahren bzw. der Berücksichtigung einer Dopplerverschiebung ausgelegt sind.

### Anwendungen

Die Anwendung der Erfindung ist nicht auf bestimmte Informationsinhalte, Codierungsverfahren, Übertragungstechniken, Übertragungsmedien o. dgl. beschränkt. Es besteht beispielsweise die Möglichkeit, das Verfahren für die akustische Informationsübertragung insbesondere mittels Ultraschall über die Luft (Fernsteuerung elektronischer Geräte, akustische Maus, Tastatur etc.) oder auch über andere gasförmige, flüssige oder feste Medien, beispielsweise unter Wasser, durch Festkörper hindurch oder über spezielle Schalleiter anzuwenden. Weitere Anwendungen bestehen beispielsweise im Funkverkehr, bei der Datenübertragung über Laserstrahlen oder über elektrisch leitende oder optische Kabel etc., bei Fernbedienungen (TV, Keyboard) oder bei Unterwassersteuerungen, sowie im kombinierten bzw. auch separaten Einsatz für die Informationsübertragung und/oder zur Bestimmung von Umgebungsinformationen.

Die in der vorstehenden Beschreibung, den Zeichnungen und den Ansprüchen offenbarten Merkmale der Erfindung können sowohl einzeln als auch in beliebiger Kombination für die Verwirklichung der Erfindung in ihren verschiedenen Ausgestaltungen von Bedeutung sein.

## Patentansprüche

1. Verfahren zur Übertragung und zum Empfang von Informationen mittels Wellen über einen Übertragungskanal, bei dem
- ein Informationssignal einer Trägerwelle aufgeprägt wird, deren Frequenz zur Bildung von zumindest einem Trägersweep in einem vorbestimmten Zeitintervall kontinuierlich fließend verändert wird, und
- die mit dem Informationssignal modulierte Trägerwelle als Übertragungssignal mit einer Empfängereinrichtung (20) empfangen und demoduliert wird,
**dadurch gekennzeichnet, dass**
- der mindestens eine Trägersweep variabel an Übertragungsbedingungen angepasst wird, wobei die Form, Höhe und/oder zeitliche Abfolge des mindestens einen Trägersweeps mit einem Steuermodul gesteuert wird, und jeder Trägersweep eine oder mehrere Informationseinheiten oder ein oder mehrere Bits trägt,
- die Übertragung der Trägerwelle als Übertragungssignal ohne eine Übertragung eines Referenzsignals erfolgt, und
- das Übertragungssignal nach dem Empfang im Frequenzbereich zur Trennung von Mehrwegekomponenten gefiltert und von Störanteilen bereinigt wird, wobei im Übertragungssignal enthaltene Mehrwegekomponenten auf separate Spektrallinien aufgegliedert werden und aus dem Spektrum eine der Mehrwegekomponenten isoliert und aus sich heraus hinsichtlich der informationstragenden Signalparameter ausgewertet wird.

2. Verfahren gemäß Anspruch 1, bei dem das Informationssignal eine im Analogverfahren modulierte Welle, vorzugsweise mit konstanter Frequenz, oder einem anderweitigen Verlauf, insbesondere mit digitaler Veränderung einzelner Signalparameter bzw. Parameterkombinationen in Gestalt einer Phasenmodulation und/oder einer Amplitudenmodulation und/oder einer von einer Frequenzcharakteristik der Trägerwelle unabhängige Frequenzmodulation umfasst.

3. Verfahren gemäß Anspruch 1 oder 2, bei dem die Trägerwelle als eine Serie von zwei oder mehreren Trägersweeps mit jeweils gleicher Frequenzcharakteristik ausgebildet ist, die auch zeitlich getrennt sein können, wobei die Abstände zwischen den Trägersweeps einheitlich oder variabel sein können.

4. Verfahren gemäß einem der Ansprüche 1 bis 3, bei dem eine Frequenzcharakteristik der Trägersweeps in Bezug auf Anstieg und Form der Änderung einer Trägerfrequenz von Trägersweep zu Trägersweep variiert wird.

5. Verfahren gemäß einem der Ansprüche 1 bis 4, bei dem im Verlauf der Übertragung eine Frequenzlage der Trägersweeps, insbesondere durch Umschalten auf unterschiedliche Frequenzbänder, verändert wird.

6. Verfahren gemäß einem der Ansprüche 1 bis 5, bei dem die Trägersweeps jeweils in n Modulationszeittakte (MZT) mit spezifischen Modulationen des Informationssignals untergliedert sind, wobei die n eine positive rationale Zahl, insbesondere eine natürliche Zahl größer als 1, ist.

7. Verfahren gemäß Anspruch 6, bei dem die Länge der Modulationszeittakte in Bezug zur Frequenz der Trägerwelle kontinuierlich oder stufenweise verändert wird.

8. Verfahren gemäß einem der Ansprüche 1 bis 7, bei dem die Informationen in Form einer relativen Veränderung von Signalparametern zwischen zwei unterschiedlichen, insbesondere benachbarten, Zeitintervallen bzw. Zeittakten codiert werden.

9. Verfahren gemäß einem der Ansprüche 1 bis 8, bei dem in einem gegebenen Frequenzband mehrere modulierte Trägersweeps übertragen werden, die sich zeitlich überlappen können, wobei diese Trägersweeps zu ein und demselben oder zu unterschiedlichen Informationssignalen gehören können.

10. Verfahren nach Anspruch 9, bei dem in einem gegebenen Frequenzband gleichzeitig ein oder mehrere, typischerweise modulierte, Trägersweeps mit unterschiedlicher Zeit- und/oder Frequenzcharakteristik bzw. auch gleichzeitig mit einer oder mehreren Trägerwellen konstanter Frequenz übertragen werden, die zu unterschiedlichen Informationssignalen gehören.

11. Verfahren gemäß einem der Ansprüche 1 bis 10, bei dem die Konfiguration der Trägersweeps bzw. Trägerwellen und deren Anordnung auf einem oder mehreren Frequenzbändern in Form eines Übertragungsprotokolls festgelegt ist.

12. Verfahren gemäß Anspruch 11, bei dem das Übertragungsprotokoll im Zuge der Informationsübertragung zwischen Sender und Empfänger in vorbestimmter, vereinbarter Weise oder in Abhängigkeit von übertragenen Informationen geändert wird.

13. Verfahren gemäß einem der Ansprüche 1 bis 12, bei dem das Informationssignal und/oder die Trägerwelle und/oder das Übertragungssignal insgesamt zur Übertragung mit einer vorbestimmten oder im Übertragungsprotokoll vereinbarten Pseudo Noise-Sequenz multipliziert wird.

14. Verfahren gemäß einem der Ansprüche 1 bis 13, bei dem die Wellen als Schallwellen oder als elektromagnetische Wellen ausgebildet sind.

15. Verfahren gemäß einem der Ansprüche 11 bis 14, bei dem nach dem Empfang gemäß einem vorgegebenen oder im Übertragungsprotokoll vereinbarten Zeit- und/oder Frequenzmuster der Trägerwellen die einem bestimmten Informationssignal bzw. Nutzer zuzuordnenden Anteile aus dem empfangenen Ubertragungssignal separiert werden.

16. Verfahren gemäß einem der Ansprüche 1 oder 15, bei dem nach dem Empfang in einer Verarbeitungsstufe des Übertragungssignals eine Multiplikation mit einer Pseudo Noise-Sequenz durchgeführt wird.

17. Verfahren gemäß einem der Ansprüche 1 bis 16, bei dem das Übertragungssignal nach dem Empfang in eine andere Frequenzform, insbesondere in ein Frequenzband mit konstant feststehenden Trägerfrequenzen überführt bzw. transformiert wird.

18. Verfahren gemäß Anspruch 17, bei dem nach dem Empfang das Überführen des Übertragungssignals in eine andere Frequenzform durch Mischen oder Multiplikation des empfangenen Signals mit einer ersten künstlich erzeugten Heterodynefrequenz erfolgt, die den gleichen Frequenzanstieg wie die Trägerwelle des Übertragungssignals aufweist, vorzugsweise gegenüber dieser aber parallel verschoben ist, so dass die Frequenz der Trägerwelle des transformierten Signals konstant fest steht, bzw. die Frequenzen der Anteile des betreffenden Spektrums konstant fest stehen.

19. Verfahren gemäß Anspruch 17, bei dem nach dem Empfang das Überführen des Übertragungssignals in eine andere Frequenzform durch Mischen oder Multiplikation des empfangenen Signals mit einer ersten künstlich erzeugten Heterodynefrequenz erfolgt, die einen zur Trägerwelle des übertragenen Signals gegenläufigen Frequenzgang aufweist, so dass die Frequenz der Trägerwelle des transformierten Signals konstant fest steht, bzw. die Frequenzen der Anteile des betreffenden Spektrums konstant fest stehen.

20. Verfahren gemäß einem der Ansprüche 18 oder 19, bei dem eine Dopplerfrequenzverschiebung des empfangenen Übertragungssignals bestimmt und bei der Erzeugung der ersten Heterodynefrequenz berücksichtigt wird.

21. Verfahren gemäß einem der Ansprüche 17 bis 20, bei dem aus dem Spektrum der in dem transformierten Signal, insbesondere infolge von Mehr-Wege-Ausbreitungen, enthaltenen Einzelfrequenzen die jeweils am besten geeignete, insbesondere die am stärksten empfangene Frequenzkomponente, isoliert wird und gegebenenfalls einer zusätzlichen Filterung im Zeitbereich, insbesondere mittels adaptiver Filter wie beispielsweise Equalizer, und/oder einer adaptiven Phasenkorrektur, insbesondere mittels PLL, unterzogen wird.

22. Verfahren gemäß einem der Ansprüche 17 bis 21, bei dem die Einzelfrequenzen mittels Filtereinrichtungen und/oder auf der Basis von einfachen oder komplexen FFT-Analysen ausgewertet werden und/oder die für die Informationskodierung relevanten Signalparameter anhand von Projektionen auf Sinus - und Kosinus-Referenzschwingung und/oder mittels eines Abtastverfahrens bestimmt werden.

23. Verfahren gemäß einem der Ansprüche 17 bis 22, bei dem aus dem Spektrum der in dem transformierten Signal enthaltenen Einzelfrequenzen jeweils zwei oder mehrere Frequenzkomponenten isoliert, separat voneinander analysiert und die Auswertungsergebnisse dann verglichen bzw. verrechnet werden, insbesondere durch Bildung der Mittelwerte aus den jeweiligen Signalparametern ggf. mit Wichtung entsprechend der Stärke der betreffenden Komponenten.

24. Verfahren gemäß einem der Ansprüche 17 bis 20, bei dem aus dem Spektrum der in dem transformierten Signal enthaltenen Einzelfrequenzen jeweils zwei oder mehrere Frequenzkomponenten isoliert und relativ zueinander so verschoben und frequenztransformiert werden, dass die Trägerwellen kohärent sind, dann miteinander verrechnet, insbesondere übereinander projiziert bzw. addiert, werden und anschließend ausgewertet werden, wobei die ermittelten bzw. verwendeten Korrekturparameter Informationen über die räumlich-strukturelle und physikalische Beschaffenheit des Übertragungskanals beinhalten, die einer gesonderten Analyse unterzogen werden können.

25. Verfahren gemäß einem der Ansprüche 18 bis 24, bei dem nach dem Empfang eine Signalverarbeitung mit automatischer Signalerkennung erfolgt, bei der:
A 1) das Empfangssignal in zwei separaten, typischerweise parallelen Bearbeitungsschritten zum einen mit der ersten künstlich erzeugten Heterodynefrequenz multipliziert wird, die in einem höheren Frequenzband liegt und zum anderen mit einer zweiten Heterodynefrequenz multipliziert wird, welche im Vergleich zur ersten Heterodynefrequenz die gleiche oder die genau umgekehrte Frequenzcharakteristik aufweist, jedoch in einem tieferen Frequenzband liegt, so dass zwei Spektren des transformierten Signals entstehen, in denen die Frequenzanteile in Bezug zur Zentralfrequenz des jeweiligen Spektrums spiegelverkehrt dargestellt sind, oder
A 2) durch Multiplikation mit der ersten, in einem höheren oder tieferen Frequenzband künstlich erzeugten Heterodynefrequenz ein erstes Spektrum des transformierten Signals erzeugt werden, aus welchem dann durch Multiplikation mit einer zweiten, dementsprechend tiefer oder höher gelegenen konstanten Heterodynefrequenz ein zweites Spektrum mit intern spiegelverkehrten Frequenzanteilen erzeugt wird, wobei
B) in beiden Spektren die jeweiligen Spektralanteile mittels frequenzabhängiger Zeitfunktionen, insbesondere Filter mit nichtlinearer Phasencharakteristik, synchronisiert, ggf. zum Erreichen der Kohärenz auch phasenkorrigiert werden, und
C) beide Spektren miteinander multipliziert werden, so dass die sich die diversen Einzelkomponenten in einer vorgegebenen Frequenzzelle zu einer kontinuierlichen Welle zusammenfügen, die den Hauptteil der Signalenergie in sich vereint, nunmehr im Frequenzbereich gefiltert und analysiert werden kann.

26. Verfahren gemäß einem der Ansprüche 1 bis 25, bei dem empfängerseitig durch Demodulation das Übertragungssignal und oder das transformierte Übertragungssignal rekonstruiert wird und dieses künstlich erzeugte Signal mit dem empfangenen Signal und/oder dessen Verarbeitungsstufen ausgewertet wird, um daraus Informationen über die Umgebung, insbesondere zur Bestimmung von Positionen und Bewegungsparametern, zur räumlich-strukturellen und physikalische Beschaffenheit des Übertragungskanals, inklusive von Informationen über dessen Profil und darin enthaltene Objekte zu extrahieren, die das Sendesignal im Prozess der Übermittlung durch die Übertragungsstrecke aufgenommen hat.

27. Verfahren gemäß einem der Ansprüche 1 bis 26, bei dem eine Sendeeinrichtung (10) vom Übertragungskanal bzw. von in diesem enthaltenen Grenzflächen oder Objekten reflektierte Abbilder oder Komponenten des Sendesignals empfängt und diese mit dem ursprünglichen Sendesignal zur Extraktion von Informationen über die Umgebung verrechnet.

28. Verfahren gemäß Anspruch 26 oder 27, bei dem die Informationen über die jeweiligen Eigenschaften und sonstige Beschaffenheit des Übertragungskanals bei der Signalerzeugung und/oder der Signalverarbeitung berücksichtigt werden.

29. Verfahren zum Senden von Informationen mittels Wellen mit einer Sendeeinrichtung (10), mit den Schritten:
- Erzeugung einer modulierten Trägerwelle, die zur Durchführung eines Verfahrens gemäß einem der Ansprüche 1 bis 14 vorgesehen ist, indem ein Informationssignal einer Trägerwelle aufgeprägt wird, deren Frequenz zur Bildung von zumindest einem Trägersweep in einem vorbestimmten Zeitintervall kontinuierlich fließend verändert wird und jeder Trägersweep eine oder mehrere Informationseinheiten oder ein order mehrere Bits trägt, und
- Abgabe der modulierten Trägerwelle,
**dadurch gekennzeichnet, dass**
der mindestens eine Trägersweep variabel an Übertragungsbedingungen angepasst wird, wobei die Form, Höhe und zeitliche Abfolge des mindestens einen Trägersweeps und/oder die Modulation des Informationssignals mit einem Steuermodul gesteuert wird.

30. Sendeeinrichtung (10), die zum Senden von Wellen, die Informationen tragen, nach einem Verfahren gemäß Anspruch 29 eingerichtet ist und die umfasst:
- zumindest eine senderseitige Generatoreinrichtung (11) zum Erzeugen der Trägerwelle mit mindestens einer kontinuierlich fließenden Frequenzveränderung, Trägersweeps,
- eine Modulatoreinrichtung (12) zum Erzeugen oder Codieren eines Informationssignals,
- eine Mischeinrichtung (13), die dazu eingerichtet ist, der Trägerwelle das Informationssignal aufzumodulieren, und
- eine Sendeantenne oder einen Sendewandler,
**gekennzeichnet durch**
- ein Steuermodul, das mit der Generatoreinrichtung (11) und der Modulatoreinrichtung (12) verbunden und das eingerichtet ist, den mindestens einen Trägersweep variabel an Übertragungsbedingungen anzupassen, wobei mit dem Steuermodul die Form, Höhe und/oder zeitliche Abfolge der Trägersweeps variabel steuerbar ist.

31. Sendeeinrichtung gemäß Anspruch 30, die zwischen der Mischeinrichtung (13) und der Sendeantenne oder dem Sendewandler eine Filtereinheit (15) aufweist.

32. Sendeeinrichtung gemäß Anspruch 30 oder 31, bei der mehrere senderseitige Generatoreinrichtungen, Modulatoreinrichtungen und/oder Mischeinrichtungen vorgesehen sind, die parallel geschaltet sind und über ein zentrales Steuermodul miteinander gekoppelt sind, welches die Form, Höhe und zeitliche Abfolge der Trägersweeps steuert, und ggf. auch eine Verzögerungseinheit und eine Überlagerungseinrichtung, typischerweise einen Summator, aufweist.

33. Sendeeinrichtung gemäß einem der Ansprüche 30 bis 32, die eine weitere Modulationseinheit bestehend aus zumindest einem PN-Sequenz-Generator und zumindest einem Multiplikator aufweist.

34. Sendeeinrichtung gemäß einem der Ansprüche 30 bis 33, die zudem eine Prozessoreinheit, typischerweise einen Korrelationsanalysator, aufweist, der zur Bestimmung von Umgebungsparametern aus empfangenen Signalkomponenten im Vergleich mit systemintern generierten Referenzsignalen (Bezugssignal), vorgesehen ist.

35. System zur Übertragung von Informationen bestehend aus zumindest einer Sendeeinrichtung (10) gemäß einem der Ansprüche 31 bis 34 und zumindest einer Empfangseinrichtung (20), die zum Empfangen von Signalwellen eingerichtet ist, die Informationen tragen und nach einem Verfahren gemäß einem der Ansprüche 1 bis 29 übertragen und empfangen wurden, wobei die Empfangseinrichtung umfasst:
- eine Trenneinrichtung (23), die zur Trennung von Signalkomponenten im Frequenzbereich eingerichtet ist,
- eine Projektionseinrichtung (22), die eine Multiplikatoreinrichtung oder eine Faltungseinheit aufweist, und
- eine Demodulator- und/oder Parameteranalyseeinrichtung (24), und wobei
- die Trenneinrichtung (23) zur Trennung von Mehrwegekomponenten im Frequenzbereich eingerichtet ist und eine Bandpassfilter-Einheit, BPF, eine steuerbare Filtereinheit oder eine FFT-Einheit enthält, und
- eine Einrichtung zur Analyse von Frequenzspektren und zum Tunen vorgesehen ist, die der Projektionseinrichtung nachgeschaltet und dazu eingerichtet ist, im Übertragungssignal enthaltene Mehrwegekomponenten auf separate Spektrallinien aufzugliedern und aus dem Spektrum eine der Mehrwegekomponenten zu isolieren.

## Claims

1. A method for transmitting and receiving information by means of waves through a transmission channel, wherein
- an information signal is attached to a carrier wave, whose frequency is continuously changed in a preset time interval to form at least one carrier sweep, and
- the carrier wave modulated with the information signal is received and demodulated with a receiving device (20),
**characterized in that**
- the at least one carrier sweep is variably adapted to transmission conditions, wherein the form, height and/or temporal sequence of the at least one carrier sweep is controlled with a control module, and each carrier sweep carries one information unit or multiple information units or one bit or multiple bits,
- the transmission of the carrier wave as transmission signal is carried out without a transmission of a reference signal, and
- after being received, the transmission signal is filtered in the frequency range for separating multipath components and cleaned of noise portions, wherein multipath components included in the transmission channel are subdivided to separate spectral lines and one of the multipath components is isolated from the spectrum and evaluated on its own with regard to information carrying signal parameters.

2. The method as claimed in claim 1, wherein the information signal comprises a wave modulated in the analog method, preferably with a constant frequency, or another course, in particular with digital change of individual signal parameters or parameter combinations in the form of phase modulation and/or amplitude modulation and/or a frequency modulation independent of the frequency characteristic of the carrier wave.

3. The method as claimed in claim 1 or 2, wherein the carrier wave is designed as a series of two or more carrier sweeps each with the same frequency characteristic, which also can be separated temporally, whereby the distances between the carrier sweeps can be uniform or variable.

4. The method as claimed in one of claims 1 to 3, wherein the frequency characteristic of the carrier sweeps is varied with respect to rise and form of the change in the carrier frequency from carrier sweep to carrier sweep.

5. The method as claimed in one of claims 1 to 4, wherein during transmission a frequency position of the carrier sweeps is changed, in particular by switching to different frequency bands.

6. The method as claimed in one of claims 1 to 5, wherein the carrier sweeps are each broken down into n modulation time pulses (MTP) with specific modulations of the information signal, whereby n is a positive rational number, in particular a natural number greater than 1.

7. The method as claimed in claim 6, wherein the length of the modulation time pulses is changed continuously or stepwise with respect to the frequency of the carrier wave.

8. The method as claimed in one of claims 1 to 7, wherein the information is coded in the form of the relative changes in the signal parameters between two different, in particular adjacent, time intervals or time pulses.

9. The method as claimed in one of claims 1 to 8, wherein in a given frequency band several modulated carrier sweeps are transmitted, which can overlap temporally, whereby these carrier sweeps can belong to one and the same or different information signals.

10. The method as claimed in claim 9, wherein in a given frequency band at the same time one or more, typically modulated, carrier sweeps with varying time and/or frequency characteristic or also at the same time with one or more carrier waves of constant frequency are transmitted belonging to different information signals.

11. The method as claimed in any one of claims 1 to 10, wherein the configuration of the carrier sweeps or carrier waves and their arrangement is established on one or more frequency bands in the form of a transmission protocol.

12. The method as claimed in claim 11, wherein the transmission protocol is altered during information transmission between sender and receiver in a predetermined agreed fashion or depending on transmitted information.

13. The method as claimed in any one of claims 1 to 12, wherein the information signal and/or the carrier wave and/or the transmission signal is multiplied overall for transmission with a pseudo noise sequence which is preset or agreed on in the transmission protocol.

14. The method as claimed in one of claims 1 to 13, wherein the waves are formed as sound waves or as electromagnetic waves.

15. The method as claimed in one of the claims 11 to 14, wherein, after receipt, according to a time and/or frequency pattern of the carrier waves either predetermined or agreed on in the transmission protocol the portions to be assigned to a specific information signal or user are separated out from the received transmission signal.

16. The method as claimed in one of claims 1 or 15, wherein, after receipt, multiplication is carried out with a pseudo noise sequence in a processing step of the transmission signal.

17. The method as claimed in one of claims 1 to 16, wherein, after receipt, the transmission signal is transferred or transformed into another frequency form, in particular into a frequency band with constantly fixed carrier frequencies.

18. The method as claimed in claim 17, wherein, after receipt, the transmission signal is transferred to another frequency form by mixing or multiplication of the received signal with an artificially generated heterodyne frequency which has the same frequency rise as the carrier wave of the transmission signal, but which is preferably shifted parallel relative to this, so that the frequency of the carrier wave of the transformed signal is constantly fixed, or the frequencies of the portions of the pertinent spectrum remain constantly fixed.

19. The method as claimed in claim 17, wherein, after receipt, the transmission signal is transferred to another frequency form by mixing or multiplication of the received signal with an artificially generated heterodyne frequency, which has a frequency course counter to the carrier wave of the transmitted signal, so that the frequency of the carrier wave of the transformed signal is constantly fixed, or the frequencies of the portions of the pertinent spectrum remain constantly fixed.

20. The method as claimed in one of claims 18 or 19, wherein a Doppler frequency shift of the received signal is determined and observed during generation of the heterodyne frequency.

21. The method as claimed in one of claims 17 to 20, wherein each best suited frequency component, in particular the strongest received, is isolated out of the spectrum of the individual frequencies contained in the transformed signal, in particular as a result of multipath propagations, and if necessary is subjected to additional filtering in the time range, in particular by means of adaptive filters such as equalisers for example, and/or adaptive phase correction, in particular by means of PLL.

22. The method as claimed in one of claims 17 to 21, wherein the individual frequencies are evaluated by means of filter devices and/or on the basis of simple or complex FFT analysis and/or the signal parameters relevant for information coding are determined by means of projections on sine and cosine reference oscillation and/or by means of a scanning procedure.

23. The method as claimed in one of claims 17 to 22, wherein each two or more frequency components are isolated from the spectrum of individual frequencies contained in the transformed signal, analysed separately from one another and the evaluation results are then compared or balanced, in particular by developing the average values from the respective signal parameters if necessary with weighting corresponding to the strength of the pertinent components.

24. The method as claimed in one of claims 17 to 20, wherein two or more frequency components are isolated from the spectrum of individual frequencies contained in the transformed signal and shifted relative to one another and frequency-transformed such that the carrier waves are coherent, then balanced with one another, in particular projected over one another or added and then evaluated, whereby the correction parameters contain information on the spatial-structural and physical nature of the transmission channel, which can undergo separate analysis.

25. The method as claimed in one of claims 18 to 24, wherein, after receipt, the signals are processed with automatic signal recognition, wherein:
A 1) the received signal is multiplied in two separate, typically parallel processing steps on the one hand with an artificially generated heterodyne frequency, which lies in a higher frequency band, and on the other hand is multiplied with a second heterodyne frequency, which has the same or the precise opposite frequency characteristic compared to the first heterodyne frequency, but lies in a deeper frequency band, so that two spectra of the transformed signal arise, in which the frequency portions are depicted mirrored with respect to the central frequency of each spectrum, or
A 2) a first spectrum of the transformed signal is generated by multiplication with one heterodyne frequency, artificially generated in a higher or deeper frequency band, from which spectrum a second spectrum with internally mirrored frequency portions is then generated by multiplication with an accordingly deeper or higher constant heterodyne frequency, whereby
B) in both spectra the respective spectral portions are synchronised by means of frequency-dependent time functions, in particular filters with non-linear phase characteristic, also phase-corrected if necessary to achieve coherency, and
C) both spectra are multiplied with one another so that the diverse individual components in a given frequency cell are combined into a continuous wave which unites the main part of the signal energy in itself, and from here on can be filtered in the frequency range and analysed.

26. The method as claimed in one of claims 1 to 25, wherein the transmission signal and or the transformed send signal is reconstructed on the receiver side by demodulation and this artificially generated signal is evaluated with the received signal and/or its processing steps in order to extract information therefrom on the environment, in particular to determine positions and motion parameters, for spatial-structural and physical quality of the transmission channel, including information on its profile and objects contained therein which the send signal has absorbed in the process of sending via the transmission path.

27. The method as claimed in one of claims 1 to 26, wherein the sender (10) receives images or components of the transmission signal reflected by the transmission channel or by contact surfaces or objects contained therein and balances these with the original transmission signal to extract information on the environment.

28. The method as claimed in one of claims 26 or 27, wherein the information on the respective properties and other nature of the transmission channel is considered with signal generation and/or signal processing.

29. Method for sending information by means of waves with a sending device (10), with the steps:
- generating a modulated carrier wave, which is provided for conducting the method according to one of the claims 1 to 14, by attaching an information signal to a carrier wave, whose frequency is continuously changed in a preset time interval to form at least one carrier sweep, and each carrier sweep carries one information unit or multiple information units or one bit or multiple bits, and
- emitting the modulated carrier wave,
**characterized in that**
the at least one carrier sweep is variably adapted to transmission conditions, wherein the form, height and temporal sequence of the at least one carrier sweep and/or the modulation of the information signal is controlled with a control module.

30. Sending device (10), which is adapted for sending waves carrying information according to a method as claimed in claim 29 and which comprises:
- at least one sender-side generator device (11) for generating of the carrier wave with at least one continuously flowing frequency change, carrier sweeps,
- a modulator device (12) for generating or coding an information signal,
- a mixer device (13) to modulate the information signal to the carrier wave, and
- a sending antenna or a sending transformer,
**characterized by**
- a control module, which is connected with the generator device (11) and the modulator device (12) and which is arranged for variably adapting the at least one carrier sweep to transmission conditions, wherein the form, height and/or temporal sequence of the carrier sweeps is variably controllable by the control module.

31. Sending device as claimed in claim 30, which has a filter unit (15) between the mixer device (13) and the sending antenna or the sending transformer.

32. Sending device as claimed in claim 30 or 31, wherein several sender-side generator devices, modulator devices and/or mixer devices are provided which are connected in parallel and are interconnected via a central control module which controls the form, height and temporal sequence of the carrier sweeps, and if necessary also has a delay unit and a heterodyne unit, typically a summing integrator.

33. Sending device as claimed in one of claims 30 to 32, which has another modulation unit comprising at least one PN sequence generator and at least one multiplier.

34. Sending device as claimed in one of claims 30 to 33, which also has a processing unit, typically a correlation analyser, which is provided for determining environmental parameters from received signal components as compared to system-generated reference signals (reference signal).

35. System for transmitting information, consisting of at least one sending device (10) according to one of the claims 31 to 34 and at least one receiving device (20), which is adapted for receiving signal waves, which carry information and which have been transmitted and received with a method according to one of the claims 1 to 29, wherein the receiving device comprises:
- a separator device (23), which is adapted for separating signal components in the frequency range,
- a projection device (22), having a multiplier device or a folding unit, and
- a demodulator and/or parameter analysis device (24), and wherein
- the separator device (23) is adapted for separating of multipath components in the frequency range and includes a band path filter unit, BPF, a controllable filter unit or a FFT unit, and
- a device for analyzing of frequency spectra and for tuning is provided, which is connected downstream of the projection device and which is adapted for subdividing multipath components included in the transmission signal to separate spectral lines and isolating one of the multipath components from the spectrum.

## Revendications

1. Procédé servant à transmettre et à recevoir des informations au moyen d'ondes par l'intermédiaire d'un canal de transmission, dans le cadre duquel
- un signal d'information d'une onde porteuse est influencé, la fréquence de ladite onde porteuse étant modifiée de manière fluide en continu pour former au moins un balayage de porteuse au cours d'un laps de temps prédéterminé, et
- l'onde porteuse modulée avec le signal d'information est reçue et démodulée à l'aide d'un dispositif de réception (20) en tant que signal de transmission,
**caractérisé en ce**
- **que** le balayage de porteuse au moins au nombre de un est adapté de manière variable aux conditions de transmission, sachant que la forme, l'amplitude et/ou le rythme du balayage de porteuse au moins au nombre de un sont commandés à l'aide d'un module de commande, et en ce que chaque balayage de porteuse supporte une ou plusieurs unités d'information ou un ou plusieurs bits,
- **que** la transmission de l'onde porteuse en tant que signal de transmission est effectuée sans transmission d'un signal de référence, et
- **que** le signal de transmission est filtré après la réception dans la plage de fréquences aux fins de la séparation de composantes à trajets multiples et est épuré de parties parasites, sachant que des composantes à trajets multiples contenues dans le signal de transmission sont divisées sur des lignes spectrales séparées et qu'une des composantes à trajets multiples est isolée du spectre et est évaluée au regard des paramètres relatifs au signal porteur de l'information.

2. Procédé selon la revendication 1, dans le cadre duquel le signal d'information comprend une onde modulée dans le procédé analogue, de préférence une onde présentant une fréquence constante ou présentant une variation quelconque, en particulier présentant une modification numérique de paramètres individuels de signal ou de combinaisons de paramètres sous la forme d'une modulation de phase et/ou d'une modulation d'amplitude et/ou d'une modulation de fréquence indépendante d'une caractéristique de fréquence de l'onde porteuse.

3. Procédé selon la revendication 1 ou 2, dans le cadre duquel l'onde porteuse est réalisée sous la forme d'une série de deux ou plusieurs balayages de porteuse présentant respectivement une caractéristique identique de fréquence, lesquels peuvent être séparés également dans le temps, sachant que les intervalles entre les balayages de porteuse peuvent être homogènes ou variables.

4. Procédé selon l'une quelconque des revendications 1 à 3, dans le cadre duquel une caractéristique de fréquence des balayages de porteuse varie en termes d'augmentation et sous la forme d'une variation d'une fréquence porteuse de balayage de porteuse en balayage de porteuse.

5. Procédé selon l'une quelconque des revendications 1 à 4, dans le cadre duquel lors de la transmission, une position de fréquence des balayages de porteuse est modifiée, en particulier par la commutation sur diverses bandes de fréquences.

6. Procédé selon l'une quelconque des revendications 1 à 5, dans le cadre duquel les balayages de porteuse sont respectivement subdivisés en n cadences de modulation (MZT) avec des modulations spécifiques du signal d'information, sachant que n est un nombre rationnel positif, en particulier un nombre naturel supérieur à 1.

7. Procédé selon la revendication 6, dans le cadre duquel la longueur des cadences de modulation est modifiée en continu ou par paliers par rapport à la fréquence de l'onde porteuse.

8. Procédé selon l'une quelconque des revendications 1 à 7, dans le cadre duquel les informations sont codées sous la forme d'une modification relative de paramètres de signal entre deux périodes de temps ou cadences différentes, en particulier voisines.

9. Procédé selon l'une quelconque des revendications 1 à 8, dans le cadre duquel plusieurs balayages de porteuse modulés sont transmis dans une bande de fréquence donnée, lesquels balayages peuvent se chevaucher dans le temps, sachant que ces balayages de porteuse peuvent relever d'un seul et même signal de transmission ou de divers signaux de transmission.

10. Procédé selon la revendication 9, dans le cadre duquel simultanément un ou plusieurs balayages de porteuse, typiquement modulés, présentant une caractéristique de temps et/ou de fréquence différente ou présentant également simultanément une ou plusieurs ondes porteuses de fréquence constante sont transmis dans une bande de fréquence donnée, lesquels relèvent de signaux d'information divers.

11. Procédé selon l'une quelconque des revendications 1 à 10, dans le cadre duquel la configuration des balayages de porteuse ou des ondes porteuses et leur agencement sur une ou plusieurs bandes de fréquence sont déterminés sous la forme d'un protocole de transmission.

12. Procédé selon la revendication 11, dans le cadre duquel le protocole de transmission est modifié au cours de la transmission de l'information entre l'émetteur et le récepteur d'une manière prédéterminée, convenue ou en fonction des informations transmises.

13. Procédé selon l'une quelconque des revendications 1 à 12, dans le cadre duquel le signal d'information et/ou l'onde porteuse et/ou le signal de transmission sont multipliés globalement aux fins de la transmission avec une séquence de pseudo-bruit prédéterminée ou convenue dans le protocole de transmission.

14. Procédé selon l'une quelconque des revendications 1 à 13, dans le cadre duquel les ondes sont réalisées sous la forme d'ondes acoustiques ou sous la forme d'ondes électromagnétiques.

15. Procédé selon l'une quelconque des revendications 11 à 14, dans le cadre duquel après la réception selon un motif de temps et/ou de fréquence des ondes porteuses prédéfini ou convenu dans le protocole de transmission, les parties devant être associées à un signal d'information défini ou à un utilisateur, issues du signal de transmission reçu sont séparées.

16. Procédé selon l'une quelconque des revendications 1 ou 15, dans le cadre duquel après la réception lors d'une étape de traitement du signal de transmission, une multiplication avec une séquence de pseudo-bruit est effectuée.

17. Procédé selon l'une quelconque des revendications 1 à 16, dans le cadre duquel le signal de transmission est transformé ou converti après la réception en une autre forme de séquence, en particulier en une bande de fréquence présentant des fréquences porteuses fixes constamment.

18. Procédé selon la revendication 17, dans le cadre duquel après la réception, la conversion du signal de transmission en une autre forme de fréquence est effectuée en mélangeant ou en multipliant le signal reçu avec une première fréquence hétérodyne générée de manière artificielle, laquelle présente la même augmentation de fréquence que l'onde porteuse du signal de transmission, laquelle est de préférence toutefois décalée de manière parallèle par rapport à cette dernière, de sorte que la fréquence de l'onde porteuse du signal transformé reste constante ou que les fréquences des parties du spectre concerné restent constantes.

19. Procédé selon la revendication 17, dans le cadre duquel après la réception, la conversion du signal de transmission en une autre forme de fréquence est effectuée en mélangeant ou en multipliant le signal reçu avec une première fréquence hétérodyne générée de manière artificielle, laquelle présente une réponse fréquentielle opposée à l'onde porteuse du signal transmis de sorte que la fréquence de l'onde porteuse du signal transformé reste constante ou que les fréquences des parties du spectre concerné restent constantes.

20. Procédé selon l'une quelconque des revendications 18 ou 19, dans le cadre duquel un décalage de fréquence Doppler du signal de transmission reçu est déterminé et est pris en compte lors de la génération de la première fréquence hétérodyne.

21. Procédé selon l'une quelconque des revendications 17 à 20, dans le cadre duquel la composante de fréquence respectivement la mieux appropriée, en particulier la composante de fréquence reçue de manière la plus intense est isolée du spectre des fréquences individuelles contenues dans le signal transformé, en particulier suite aux propagations à trajets multiples et est éventuellement soumise à un filtrage supplémentaire dans la plage temporelle, en particulier au moyen de filtres adaptatifs tels que des égaliseurs, et/ou est soumise à une correction de phase adaptative, en particulier au moyen d'une boucle à phase asservie (PLL, Phase-Locked Loop).

22. Procédé selon l'une quelconque des revendications 17 à 21, dans le cadre duquel les fréquences individuelles sont évaluées au moyen de dispositifs de filtrage et/ou sur la base d'analyses FFT simples ou complexes et/ou dans le cadre duquel les paramètres de signal importants pour le codage de l'information sont déterminés à l'aide de projections sur l'oscillation sinus et cosinus de référence et/ou au moyen d'un procédé de balayage.

23. Procédé selon l'une quelconque des revendications 17 à 22, dans le cadre duquel respectivement deux ou plusieurs composantes de fréquence sont isolées du spectre des fréquences individuelles contenues dans le signal transformé, sont analysées séparément les unes des autres et dans le cadre duquel les résultats de l'évaluation sont alors comparés ou imputés, en particulier en formant des valeurs moyennes à partir des paramètres de signal respectifs éventuellement en pondérant de manière correspondante l'intensité des composantes concernées.

24. Procédé selon l'une quelconque des revendications 17 à 20, dans le cadre duquel respectivement deux ou plusieurs composantes de fréquence sont isolées du spectre des fréquences individuelles contenues dans le signal, et sont décalées les unes par rapport aux autres et sont transformées dans leur fréquence de telle manière que les ondes porteuses sont cohérentes, sont alors imputées les unes aux autres, en particulier sont projetées ou additionnées les unes aux autres, puis sont évaluées, sachant que les paramètres de correction déterminés ou utilisés contiennent des informations concernant la nature spatio-structurelle et physique du canal de transmission, lesquelles informations peuvent être soumises à une analyse séparée.

25. Procédé selon l'une quelconque des revendications 18 à 24, dans le cadre duquel après la réception est effectué un traitement de signal avec une identification de signal automatique, dans le cadre de laquelle :
A1) le signal de réception est multiplié d'une part avec la première fréquence hétérodyne générée de manière artificielle lors de deux étapes de traitement séparées, typiquement parallèles, laquelle fréquence se trouve dans une bande de fréquence plus élevée, et est d'autre part multiplié avec une deuxième fréquence hétérodyne, laquelle présente en comparaison avec la première fréquence hétérodyne la même caractéristique de fréquence ou précisément la caractéristique inverse et se trouve toutefois dans une bande de fréquence plus basse de sorte qu'apparaissent deux spectres du signal transformé, dans lesquels les parties de fréquence sont représentées de manière inversée symétriquement par rapport à la fréquence centrale du spectre respectif, ou
A2) un premier spectre du signal transformé est généré par la multiplication avec la première fréquence hétérodyne générée de manière artificielle dans une bande de fréquence plus élevée ou plus basse, à partir duquel spectre est alors généré par la multiplication avec une deuxième fréquence hétérodyne constante située en conséquence plus haut ou plus bas un deuxième spectre présentant des parties de fréquence inversées symétriquement de manière interne, sachant que
B) dans les deux spectres, les parties spectrales respectives sont synchronisées au moyen de fonctions temporelles dépendant de la fréquence, en particulier au moyen de filtres présentant une caractéristique de phase non linéaire, sont éventuellement également corrigées en phase aux fins de l'obtention de la cohérence, et
C) deux spectres sont multipliés l'un avec l'autre de sorte que les diverses composantes individuelles se rassemblent en une cellule fréquentielle prédéfinie pour former une onde continue qui unit en elle la partie principale de l'énergie de signal, puis peut être filtrée et analysée dans la plage de fréquences.

26. Procédé selon l'une quelconque des revendications 1 à 25, dans le cadre duquel le signal de transmission et/ou le signal de transmission transformé sont reconstruits côté récepteur par démodulation et dans lequel ce signal généré de manière artificielle est évalué avec le signal reçu et/ou avec les étapes de traitement de ce dernier afin d'en extraire des informations concernant l'environnement, en particulier servant à déterminer des positions et des paramètres de déplacement, concernant la nature spatio-structurelle et physique du canal de transmission, y compris des informations concernant son profil et les objets contenus dans celui-ci, que le signal d'émission a absorbées lors du transfert par le trajet de transmission.

27. Procédé selon l'une quelconque des revendications 1 à 26, dans le cadre duquel un dispositif d'émission (10) reçoit en provenance du canal de transmission ou en provenance des surfaces de délimitation ou des objets contenus dans ledit canal de transmission, des représentations ou composantes réfléchies du signal d'émission et impute ces dernières à l'environnement avec le signal d'émission d'origine aux fins de l'extraction des informations.

28. Procédé selon la revendication 26 ou 27, dans le cadre duquel les informations concernant les propriétés respectives et la nature du canal de transmission sont prises en compte lors de la génération du signal et/ou lors du traitement du signal.

29. Procédé servant à envoyer des informations au moyen d'ondes à l'aide d'un dispositif d'émission (10), comportant les étapes suivantes consistant à :
- générer une onde porteuse modulée, qui est prévue pour la mise en oeuvre d'un procédé selon l'une quelconque des revendications 1 à 14, en ce qu'un signal d'information d'une onde porteuse est influencé, la fréquence de ladite onde porteuse étant modifiée en continu de manière fluide lors d'un laps de temps prédéterminé aux fins de la formation d'au moins un balayage de porteuse, et en ce que chaque balayage de porteuse supporte une ou plusieurs unités d'information ou un ou plusieurs bits, et
- distribuer l'onde porteuse modulée,
**caractérisé en ce que**
le balayage de porteuse au moins au nombre de un est adapté de manière variable aux conditions de transmission, sachant que la forme, l'amplitude et le rythme du balayage de porteuse au moins au nombre de un et/ou la modulation du signal d'information sont commandés avec un module de commande.

30. Dispositif d'émission (10), qui est mis au point pour envoyer des ondes comportant des informations selon un procédé selon la revendication 29 et qui comprend :
- au moins un dispositif générateur (11) côté émetteur servant à générer l'onde porteuse avec au moins une variation de fréquence en continu et fluide, le balayage de porteuse,
- un dispositif modulateur (12) servant à générer ou à coder un signal d'information,
- un dispositif de mélange (13), qui est mis au point pour moduler le signal d'information sur l'onde porteuse, et
- une antenne d'émission ou un transducteur d'émission,
**caractérisé par**
- un module de commande, qui est relié au dispositif générateur (11) et au dispositif modulateur (12) et qui est mis au point pour adapter de manière variable le balayage de porteuse au moins au nombre de un aux conditions de transmission, sachant que la forme, l'amplitude et/ou le rythme des balayages de porteuse peuvent être commandés de manière variable à l'aide du module de commande.

31. Dispositif d'émission selon la revendication 30, qui présente une unité filtrante (15) entre le dispositif de mélange (13) et l'antenne d'émission ou le transducteur d'émission.

32. Dispositif d'émission selon la revendication 30 ou 31, dans le cadre duquel plusieurs dispositifs générateurs côté récepteur, des dispositifs modulateurs et/ou des dispositifs de mélange sont prévus, lesquels sont branchés de manière parallèle et sont couplés les uns aux autres par l'intermédiaire d'un module de commande central, qui commande la forme, l'amplitude et le rythme des balayages de porteuse et qui présente éventuellement également une unité de temporisation et un dispositif de chevauchement, typiquement un additionneur.

33. Dispositif d'émission selon l'une quelconque des revendications 30 à 32, qui présente une unité de modulation supplémentaire constituée d'au moins un générateur de séquence PN et d'au moins un multiplicateur.

34. Dispositif d'émission selon l'une quelconque des revendications 30 à 33, qui présente en outre une unité processeur, typiquement un dispositif d'analyse de corrélation, qui est prévu aux fins de la détermination de paramètres relatifs à l'environnement à partir des composantes de signal reçues en comparaison avec des signaux de référence générés de manière interne au système (signal de référence).

35. Système de transmission d'informations, constitué d'au moins un dispositif d'émission (10) selon l'une quelconque des revendications 31 à 34 et d'au moins un dispositif de réception (20) mis au point pour recevoir des ondes de signal, lesquelles comportent des informations et ont été transmises et reçues selon un procédé selon l'une quelconque des revendications 1 à 29, sachant que le dispositif de réception comprend :
- un dispositif de séparation (23), qui est mis au point pour séparer des composantes de signal dans la plage de fréquences,
- un dispositif de projection (22), qui présente un dispositif multiplicateur ou une unité de renvoi, et
- un dispositif démodulateur et/ou d'analyse de paramètres (24), et sachant
- que le dispositif de séparation (23) est mis au point pour séparer des composantes à trajets multiples dans la plage de fréquences et contient une unité filtre-passe-bande, BPF, une unité filtre pouvant être commandée ou une unité FFT, et
- qu'un dispositif destiné à l'analyse des spectres de fréquences et destiné à la syntonisation est prévu, lequel dispositif est monté en aval du dispositif de projection et est mis au point pour répartir des composantes à trajets multiples contenues dans le signal de transmission sur des lignes spectrales séparées et pour isoler du spectre une des composantes à trajets multiples.
